(19) Europäisches Patentamt
European Patent Office
Office européen des brevets

(11) **EP 1 395 811 B1**

(12) **FASCICULE DE BREVET EUROPEEN**

(45) Date de publication et mention
de la délivrance du brevet:
**21.10.2009 Bulletin 2009/43**

(21) Numéro de dépôt: **02727052.9**

(22) Date de dépôt: **17.04.2002**

(51) Int Cl.:
***G01N 21/89*** *(2006.01)*

(86) Numéro de dépôt international:
**PCT/BE2002/000055**

(87) Numéro de publication internationale:
**WO 2002/101366 (19.12.2002 Gazette 2002/51)**

(54) **PROCEDE DE CARACTERISATION EN LIGNE D'UNE SURFACE EN MOUVEMENT ET DISPOSITIF POUR SA MISE EN OEUVRE.**

VERFAHREN UND VORRICHTUNG ZUR ON-LINE-CHARAKTERISIERUNG EINER BEWEGTEN OBERFLÄCHE

METHOD FOR ONLINE CHARACTERISATION OF A MOVING SURFACE AND DEVICE THEREFOR

(84) Etats contractants désignés:
**AT BE CH CY DE DK ES FI FR GB GR IE IT LI LU MC NL PT SE TR**

(30) Priorité: **13.06.2001 BE 200100398**

(43) Date de publication de la demande:
**10.03.2004 Bulletin 2004/11**

(73) Titulaire: **Centre de Recherches Metallurgiques - Centrum voor
de Research in de Metallurgie
1200 Bruxelles (BE)**

(72) Inventeurs:
• **MOREAS, Geneviève
B-4520 Wanze (BE)**
• **HARDY, Yves
B-4102 Ougree (BE)**

• **SCHYNS, Marc
B-4960 Roclenge-Sur-Geer (BE)**

(74) Mandataire: **pronovem
Office Van Malderen
Boulevard de la Sauvenière 85/043
4000 Liège (BE)**

(56) Documents cités:
| EP-A- 0 557 558 | BE-A- 1 005 960 |
| FR-A1- 2 666 884 | GB-A- 2 204 947 |
| US-A- 4 417 149 | US-B1- 6 206 986 |

• G.MORÉAS ET AL.: 'Caractérisation des tôles galvannealed' LA REVUE DE MÉTALLURGIE-CIT vol. 98, no. 6, Juin 2001, pages 599 - 606, XP001043697

**Description**

*Domaine technique*

La présente invention a trait à un procédé de caractérisation en ligne d'une surface en mouvement, en particulier la surface d'une bande en acier en défilement continu ayant subi un traitement de galvannealing, ainsi qu'à un dispositif pour sa mise en oeuvre.

L'invention prend place dans le contexte du développement des moyens de contrôle en ligne des processus industriels, c'est-à-dire au moment même de l'opération et de préférence en continu et en temps réel, par opposition à des contrôles opérés ponctuellement et à posteriori et dont les résultats ne servent qu'à adapter les paramètres de travail des produits ultérieurs en vue d'obtenir des caractéristiques précises et a fortiori d'éviter les défauts constatés lors de contrôles.

La présente méthode est d'application dans un grand nombre de procédés de fabrication, notamment métallurgiques, et ce aussi bien pour contrôler directement les caractéristiques de surface des produits obtenus, cas des bandes laminées ou revêtues, que pour la surveillance de l'état des outils mis en oeuvre, cas des cylindres de laminoir.

Par la suite, la description du procédé de caractérisation d'une surface, objet de la présente invention, est axée sur la fabrication d'une bande d'acier soumise à une opération de galvanisation puis de recuit, communément appelée "bande traitée par galvannealing", mais cela ne limite en rien la portée de l'invention, laquelle peut aussi être appliquée dans le cadre d'autres procédés de fabrication dont ceux rappelés ci-dessus.

*Etat de la technique*

Il est bien connu que l'acier constitue un matériau de construction de choix pour de nombreux domaines d'application. Sa haute résistance mécanique, ainsi que sa grande aptitude au formage, au soudage et à l'application de revêtements de protection ou de décoration sont des propriétés dont l'intérêt technique est reconnu depuis longtemps. De plus, son prix de revient avantageux et son recyclage aisé le rendent également intéressant du point de vue économique.

En particulier, l'acier est très largement utilisé en construction automobile où le récent développement des aciers de résistance a permis de contribuer à la réduction du poids des véhicules et ainsi à une meilleure préservation de l'environnement, notamment par le biais d'une diminution de la consommation de carburant, et donc, des rejets polluants y associés.

L'acier est cependant sujet à la corrosion par différents agents agressifs, en particulier par les sels de déneigement dans le cas des véhicules automobiles, et il doit être protégé afin de conserver ses propriétés de résistance pendant de nombreuses années.

Parmi les nombreux matériaux utilisés pour protéger l'acier contre la corrosion, le zinc s'est avéré particulièrement intéressant, en raison notamment de son comportement sacrificiel, bien connu des hommes du métier. Au niveau industriel, on applique actuellement deux techniques principales de dépôt de zinc sur l'acier, à savoir le dépôt électrolytique et la méthode par immersion dite "à chaud" ou "au trempé".

Si l'on se place dans le cadre de l'industrie automobile, on constate que non seulement les besoins de l'automobile s'orientent vers des tôles de plus en plus résistantes et fines afin de diminuer le poids des véhicules mais qu'en plus les revêtements de zinc utilisés dans l'automobile sont souvent alliés au fer de l'acier pour obtenir un recouvrement Fe-Zn plus apte à la soudure, peinture et apportant de meilleures performances anti-corrosion.

Ces revêtements de zinc ou d'alliages de zinc se font par une succession d'étapes que l'on peut résumer comme suit :

- un recuit de recristallisation en continu de la tôle afin de lui donner les propriétés mécaniques nécessaires à son utilisation finale et de préparer la chimie de surface de la tôle pour la rendre compatible avec l'étape ultérieure de galvanisation par trempé à chaud et
- une étape de galvanisation par trempé à chaud dans un bain de zinc ou d'alliage de zinc en fusion contenant une teneur en aluminium inférieure à 0,25%.
- enfin on crée éventuellement une couche d'alliage Fe-Zn en effectuant un recuit d'alliation, d'où le nom de traitement "galvanneal" ou "galvannealing" (pour "galvanizing + annealing").

Ce recuit d'alliation, largement appliqué aujourd'hui, consiste à réchauffer une bande galvanisée, immédiatement après sa sortie du bain de revêtement, pour provoquer un phénomène de recuit de diffusion entre la couche de zinc déposée et le fer du substrat, de manière à obtenir un alliage fer-zinc contenant généralement entre 7 et 13 % de fer, idéalement entre 9 et 11,5 %.

L'acier ayant subi un revêtement galvannealed présente une bonne adhérence à la peinture, une haute résistance à la corrosion et une bonne soudabilité, notamment lors du soudage par point.

On notera cependant que le dit acier galvannealed n'est pas toujours exempt de défauts, tels que le powdering ou flaking lors de la mise sous forme à la presse. Ces défauts sont directement liés à la composition et à la structure des intermétalliques Fe-Zn formés lors de la phase de réchauffage du processus de réalisation du produit galvannealed. Les cinétiques de formation et de croissance de ces différentes phases (Fe-Zn, Fe-Al ou Fe-Al-Zn) sont liées aux paramètres définissant les conditions opératoires tels que la composition chimique de l'acier formant le substrat traité, la composition chimique du bain de revêtement et les caractéristiques du cycle de chauffage, à savoir le temps, la température et l'évolution temporelle de cette dernière.

Vu les éléments développés ci-dessus, un contrôle optimal du procédé de galvannealing demanderait à connaître en temps réel les caractéristiques du revêtement formé sur la surface en acier, éventuellement en prenant comme paramètre analysé la teneur en fer dans l'alliage réalisé en surface.

Cette approche basée sur la détermination en ligne du taux de fer a fait l'objet d'un grand nombre de développements, notamment au niveau des capteurs, jauges RX et autres, sans pour autant déboucher sur une solution qui donne des résultats acceptables et fiables lors de sa mise en oeuvre dans le contexte de la production industrielle de bandes en acier galvannealed.

La plupart des recherches en ce domaine sont orientées vers une modélisation de la cinétique de croissance du taux de fer dans l'alliage formé en surface de l'acier galvannealed et ce en fonction du cycle thermique appliqué. Les algorithmes issus de , cette approche permettent de contrôleur l'opération de galvannealing en procédant à une ou plusieurs mesures de température lors du cycle de chauffage opéré lors de ladite opération et en corrélant la ou les valeurs mesurées au taux de fer supposé être réalisé tout en tenant compte d'autres paramètres représentatifs de la ligne industrielle investiguée, lesdits paramètres étant inclus dans l'algorithme de contrôle issu de la modélisation de ladite ligne.

Cette manière de procéder est relativement aisée dans la phase finale du processus de galvannealing, c'est-à-dire quand l'alliage est réalisé, ce qui correspond à une émissivité ε élevée de la tôle (ε > 0,7), mais est fort difficile d'application dans la première moitié du cycle de chauffage où l'on a une émissivité s très faible (ε < 0,3), la tôle galvanisée étant très brillante. La méthode précédente reste dépendante d'un contrôle indirect basé sur des mesures ponctuelles opérées en laboratoire et ne permet pas un contrôle rapide de l'opération de galvannealing en vue de limiter les rebuts sur une ligne industrielle.

Le document G. MOREAS, Y. HARDY, « Caractérisation des tôles galvannealed », La Revue de Métallurgie-CIT, juin 2001, pages 599-606, qui est la version actualisée d'une présentation aux Journées Sidérurgiques Internationales 2000 de l'ATS (13-14 décembre 2000), décrit un capteur d'inspection de surface de type microscope industriel à fort grossissement pour le contrôle de qualité en ligne du revêtement galvanneal. Dans le procédé de galvannealing, la densité de surface de la phase intermétallique ζ est une caractéristique de la qualité du revêtement. Pour estimer cette densité, le système optique, placé à 20 mm de la surface du produit, acquiert des images dans lesquelles les cristaux ζ sont clairement identifiés et dont le traitement permet de caractériser le pourcentage de fer dans le revêtement. La résolution spatiale est de 1 μm, le positionnement vertical est précis à 1 μm et le capteur est capable d'acquérir plus de deux images par seconde. Installé sur la ligne de production, ce capteur acquiert en permanence des images dont le traitement fournit l'information nécessaire au contrôle de paramètres en ligne.

*Présentation de l'invention.*

La présente invention a pour objet de proposer un procédé basé une approche innovante car mettant en oeuvre l'analyse d'images obtenues par l'observation visuelle microscopique de la surface de la bande d'acier subissant le procédé de galvannealing. Le principe de base du montage requis pour obtenir les images en question est connu en soi et est décrit dans la publication suivante:

**Characterization of galvannealed strip.**

Moreas, G ; Hardy, Y Centre de Recherches Metallurgiques (Belgium) Advanced Sensors for Metals Processing 15-27 Aug. 1999 ISSN: 0-919086-92-6

Le procédé de caractérisation, objet de la présente invention, ne présente pas les inconvénients précités liés à un contrôle indirect et permet d'obtenir, après traitement de l'image obtenue par visualisation microscopique, un signal proportionnel au taux de fer, voire directement proportionnel au taux de poudrage, les deux grandeurs étant fortement corrélées, et ce de manière simple et économique, sans nuire à la productivité des lignes de revêtement existantes sur lesquelles il peut être aisément mis en oeuvre.

En outre, le procédé de l'invention permet aussi de caractériser directement la phase Fe-Zn apparaissant en surface et de la mémoriser sous forme de fichier image.

Le procédé de caractérisation est défini à la revendication 1. Le dispositif mettant en oeuvre le procédé est défini à la revendication 12.

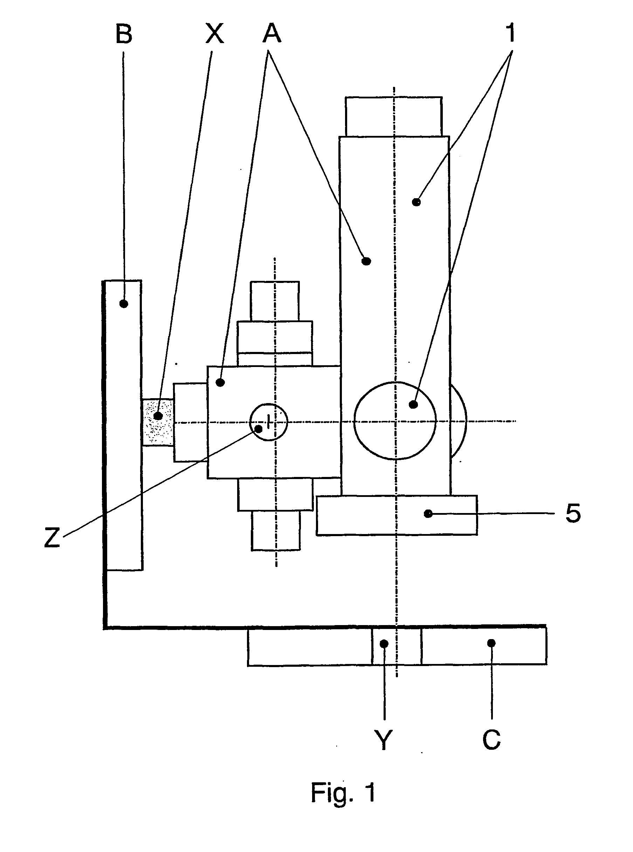

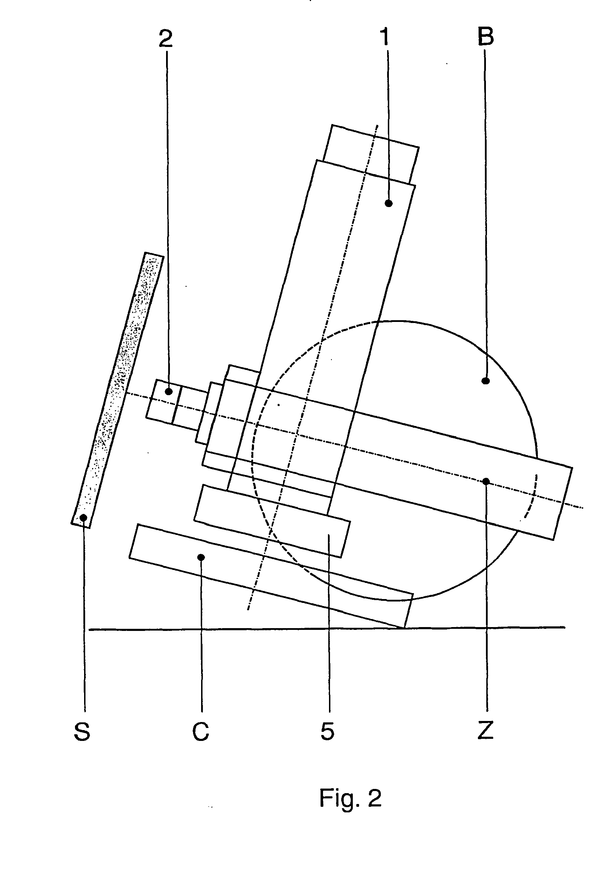

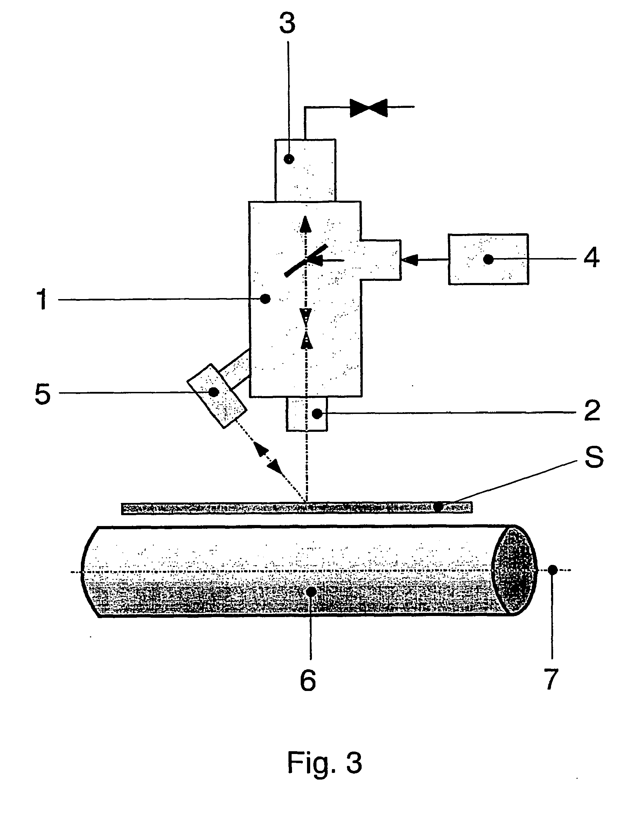

En vue de permettre une compréhension aisée de la description de la présente invention, on fera référence aux figures 1, 2, 3 et 4, qui sont respectivement :

- la figure 1 est une représentation schématique en élévation de l'ensemble utilisé pour mettre en oeuvre le procédé de l'invention ;
- la figure 2 est une représentation schématique de profil du même ensemble que celui de la figure 1 ;
- la figure 3 est le schéma de principe de fonctionnement de l'ensemble utilisé pour mettre en oeuvre le procédé de l'invention, et
- la figure 4 montre l'évolution d'une part du fer dosé chimiquement sur une bande d'acier traitée selon différentes températures et d'autre part le pourcentage de fer calculé selon la méthode de la présente invention.

Conformément à la présente invention, un procédé de caractérisation en ligne d'une surface (S) en mouvement, de préférence une tôle galvanisée, mettant en oeuvre principalement :

un premier ensemble appelé ensemble A consistant en au moins un microscope industriel (1) équipé d'un objectif à grande distance de travail (2), de préférence > 5 mm, une lentille d'adaptation caméra, un appareil de prise de vue avec une sortie analogique ou digitale, comme par exemple une caméra CCD (3), un éclairage de type champ clair (bright field) et/ou champ sombre (dark field) comprenant un laser (4), un capteur de distance (5), et un moteur agissant sur le déplacement selon l'axe (Z), c'est-à-dire le déplacement selon l'axe optique du microscope afin de permettre la focalisation correcte du système, ledit ensemble A étant monté sur un ensemble appelé ensemble D, lequel comprend deux éléments (B) et (C), par exemple des tables de rotation (B) et (C), ledit ensemble D permettant de positionner l'axe optique, c'est-à-dire (Z), de manière perpendiculaire au plan contenant la surface (S) observée, préférentiellement ledit moyen consiste en au moins deux tables de rotation motorisées (B) et (C) permettant par leur action conjuguée de positionner l'axe optique (Z) du microscope perpendiculairement au plan d'observation contenant la surface (S) examinée, l'ensemble D portant l'ensemble A étant éventuellement pourvu d'un système antivibratoire, permettant d'isoler ledit ensemble de la charpente métallique, telle qu'existante en ligne industrielle de recuit continu et galvanisation, devant le supporter et soumise aux diverses vibrations souvent présentes dans ce type de procédé industriel ;

- un ensemble de moyens, comprenant un ordinateur permettant d'assurer au moins les opérations suivantes :

  • contrôler les moyens de positionnement de l'axe optique, c'est-à-dire par exemple le ou les moteurs de réglage de la distance selon l'axe optique (Z) et de positionnement des tables (B) et (C),
  • contrôler la distance entre l'objectif (2) du microscope et la surface (S) examinée,
  • agir sur l'éclairage laser (4) précité,
  • décider de la prise d'images et étant pourvu d'au moins une carte d'acquisition d'images (frame grabber) apte à travailler avec des caméras en fonctionnement • asynchrone,
  • traiter et analyser des images,
  • éventuellement, émettre un diagnostic et réaliser l'archivage des résultats,

est essentiellement caractérisé en ce qu'on effectue au moins les opérations suivantes:
- on positionne le produit en mouvement comportant la surface (S) à caractériser de manière à pouvoir répéter ledit positionnement dans le temps, préférentiellement dans le cas d'une bande en acier en défilement, on applique ladite bande par traction sur cette dernière sur la surface d'un rouleau ;
- on positionne le microscope (1) de manière telle que l'axe optique (Z) soit perpendiculaire au plan comprenant la surface (S) examinée à l'échelle microscopique, préférentiellement dans le cas d'une bande (S) d'acier en défilement et passant sur un cylindre (6), l'axe optique (Z) du système croise orthogonalement l'axe (7) du cylindre et est compris dans un segment d'arc compris entre la 1ère ligne de contact entre la bande supportant la surface (S) et le cylindre (6) et la dernière ligne de contact entre la bande supportant la surface (S) et le cylindre (6) afin de se placer à un endroit du rouleau où le produit épouse parfaitement la forme du cylindre (6) et donc où la position de sa surface n'est fonction que de la position du rouleau (6) et de la surface (S) elle-même ;
- on focalise le système optique de manière à obtenir une image nette ;
- on éclaire la surface à caractériser au moyen d'un éclairage de type stroboscopique, préférentiellement on utilise un éclairage laser (4) stroboscopique avec un temps d'éclairage dont la valeur est conforme au calcul suivant

$$t = d/V \ \mu s$$

avec

V : la vitesse linéaire du produit en m/s

d : la dimension d'un pixel de caméra rapportée au champ de vision, défini lui-même par la résolution requise pour l'application, dimension donnée en $\mu$m, par exemple 1 $\mu$m, pour une surface galvanisée et alliée (galvanneal) ;

et t est le temps nécessaire pour que le produit parcoure d $\mu$m,

la valeur de $t_{max}$ étant définie selon une règle de bonne pratique qui dit que pour figer un objet en mouvement, on doit l'éclairer pendant au maximum le temps nécessaire pour qu'il ait bougé de la distance de 1/4 de pixel, cela afin d'éviter un effet de flou dans l'image obtenue ;

- on utilise un moyen distinct pour casser la cohérence du faisceau servant à l'éclairage, de préférence ce moyen consiste en un ou plusieurs diffuseurs ;
- on effectue la prise d'au moins une image focalisée ;
- on procède à l'acquisition asynchrone d'images de la surface (3) au moyen d'une carte électronique de capture d'image 'frame grabber' ; préférentiellement dans le cas d'une bande d'acier en défilement et passant sur un cylindre, étant donné que ledit cylindre présente toujours un faux rond lié aux tolérances de construction, la distance objectif/plan d'observation varie suivant un cycle temporel qui est fonction de la vitesse de défilement en ligne à l'endroit d'inspection, on positionne le système de sorte que la distance de focalisation soit dans l'intervalle de variation de distance lié au faux rond du cylindre de manière à ce que la surface d'observation passe périodiquement par une position de focalisation ;
- on traite et analyse les images acquises en temps réel; le traitement consiste au moins en une opération ayant pour objet d'affranchir l'image captée de toute variation de niveau moyen d'éclairage et/ou d'un effet de réflectivité liée au produit, de manière à éliminer l'arrière-plan;
- on analyse l'image en temps réel en définissant un critère de détermination de la qualité de l'image obtenue, par exemple le niveau de netteté de ladite image, on divise l'image en l*m zones, de préférence, l et m sont compris entre 6 et 10 dans le cadre de l'analyse d'une bande d'acier galvanisé, on associe à chaque zone un paramètre de netteté $n_i$, on évalue ledit paramètre $n_i$ pour chaque zone, on calcule un coefficient de netteté total qui sert de critère d'acceptation ou de refus de l'image considérée pour son traitement ultérieur ;
- on effectue une série d'opérations afin d'isoler et de qualifier les différents objets présents dans l'image acquise;
- on procède à un premier tri des objets identifiés précités en considérant qu'on élimine un objet si ce dernier appartient à une zone floue c'est-à-dire répondant au critère $n_i <$ seuil de netteté prédéfini L ;
- on effectue ensuite un second tri sur les objets restants en fonction de leur surface et de leurs dimensions,
- on pondère leur nombre respectif au moyen du coefficient de netteté total mentionné plus haut par application des formules suivantes :

$$p = ( \Sigma p_i ) / ( l * m )$$

$$\text{avec si} \quad n_i < L, \ p_i = 0, \ \text{sinon} \quad p_i = 1$$

où

$n_i$ coefficient de netteté calculé de la zone i;

L seuil de netteté prédéfini, obtenu par étalonnage en laboratoire ou à partir d'un grand nombre d'images sur lesquelles on s'est affranchi de l'arrière-plan ;

$p_i$ coefficient de pondération de la zone i ;

p coefficient de netteté total ;

étant donné que chaque nombre N d'objets trouvés dans une image et déterminés comme appartenant à un même ensemble est pondéré par le coefficient de netteté total de sorte que:

$$N_{final} = N / p$$

où $N_{final}$ représente le nombre final d'objets considérés, en tenant compte des zones floues de l'image analysée ;

- on élimine l'image analysée si le coefficient de netteté total est inférieur à une valeur déterminée comme minimum $p_{min}$ ; préférentiellement $p_{min} = 0,5$ ;
- on utilise les valeurs obtenues lors des opérations de tri précédentes pour déterminer les caractéristiques de la surface inspectée, par exemple le taux de fer, le poudrage, la densité de cristaux.

Ci-après, un exemple de calcul du coefficient de netteté :

$$n_i = \sum_{k=0}^{H} \sum_{j=1}^{W} \text{pixel}_i[k][j-1] - \text{pixel}_i[k][j]$$

avec $\text{pixel}_i[k][j]$ = valeur du pixel de la ligne k et de la colonne j de la zone i.

Dans le contexte de la modalité précitée, il convient de préciser qu'en ce qui concerne:

La focalisation :

On appelle distance de travail la distance entre la surface observée et la face avant de l'objectif.
Deux aspects sont à considérer pour la focalisation du système.
D'une part, le système doit être initialement positionné de sorte que l'axe optique soit le plus parfaitement possible perpendiculaire à la surface à observer.
D'autre part, vu la faible profondeur de champ disponible liée à des limitations techniques, une image correcte ne peut être obtenue que si le niveau moyen de la topographie à l'échelle microscopique de la surface à observer se trouve dans un intervalle, préférentiellement au milieu, relativement restreint défini par les valeurs suivantes : distance de travail $\pm$ demi-profondeur de champ de la lentille de l'objectif (2) ; actuellement sont techniquement possibles des distances de travail de 10 mm à 30 mm avec une profondeur de champ de 5 $\mu$m à 15 $\mu$m. De ce fait, la distance entre la surface et le capteur doit être mesurée de manière très précise et très reproductible.
D'autre part, il convient de garder au mieux l'axe optique (Z) perpendiculaire à la surface (S) observée.
Dans le cadre de la présente invention, ces deux positionnements (axe (Z) et distance objectif (2) - surface (S)) sont réalisés de manière automatique. On réalise un positionnement initial et à intervalles réguliers, notamment lors du redémarrage de l'installation et/ou lorsque le système analyse un trop grand nombre d'images floues (par exemple > 50 %) et/ou une variation de distance capteur/produit sortant de l'intervalle de variation autorisé actuellement par la technique, ce qui correspond à une profondeur de champ de 5 à 15 $\mu$m.
Le positionnement de l'axe optique perpendiculairement au plan d'observation peut être réalisé au moyen de 2 tables de rotation et du capteur de distance. La méthode consiste à positionner le système de sorte que pour un mouvement de chaque table, le signal de distance soit au minimum de sa valeur.
En ce qui concerne le réglage de la distance entre le système et le cylindre, on utilise deux méthodes. Un positionnement absolu sur base d'une valeur de focalisation prédéterminée en laboratoire et un positionnement plus précis sur base d'une analyse de contraste des images obtenues à différentes positions.
Enfin, on opère alors la prise d'images focalisées comme explicité ci-dessous en adaptant l'éclairage au mode de déplacement du produit inspecté.

L'éclairage

Le produit à observer étant défilant, et les grossissements requis étant importants, un éclairage de type stroboscopique est nécessaire afin de figer l'image et éviter un effet de traînée sur cette dernière. Le temps d'éclairage ne peut être supérieur au temps nécessaire pour parcourir la distance correspondant en bonne pratique à un 1/4 pixel. Considérant, par exemple, une caméra CCD de 768 pixels x 576 pixels qui est couplée à un objectif 20x à grande distance de travail (20 mm) et avec une profondeur de champ de 7 $\mu$m, une lentille d'adaptation caméra de 5x fournissant un champ de vision de 250 $\mu$m x 190 $\mu$m, pour un produit défilant à une vitesse de 2 m/s et un champ de 190 $\mu$m de long: 1/4 pixel de caméra correspond alors à 0.08 $\mu$m de champ de vision.
Temps nécessaire pour parcourir cette distance : $0.08*1/(2*10^6)=40$ ns

Considérant la caméra susmentionnée, pour un produit défilant à une vitesse de 10 m/s et un champ de $800\mu m$ de long : 1/4 pixel de caméra = 0.35 $\mu m$

Temps nécessaire pour parcourir cette distance : 0.35*1/(10*10$^6$)=35 ns

En conséquence, vu les temps d'éclairage, un éclairage laser doit être utilisé.

On utilise aussi 2 diffuseurs, le premier diffuseur, d'une part élargit le faisceau laser et casse une partie de sa cohérence, et d'autre part, il évite d'attaquer l'entrée de la fibre avec un faisceau trop concentré et donc de la détériorer. Le second diffuseur élargit de nouveau le faisceau laser et casse également une partie de sa cohérence. Le couplage des 2 diffuseurs et de la fibre optique permet de casser la cohérence du faisceau laser et donc d'éviter un phénomène d'interférences au niveau de l'image formée.

L'acquisition d'images, par exemple dans le cas de tôles galvannealed, est du type asynchrone au moyen d'une carte 'frame grabber'.

Le système étant placé face à un cylindre qui présente un faux rond, la distance objectif/plan d'observation varie suivant un cycle temporel fonction de la vitesse de ligne à l'endroit d'inspection.

Initialement, le système est positionné de sorte que la distance de focalisation soit préférentiellement au milieu de l'intervalle de variation de distance lié au faux rond du cylindre. De cette manière, la surface d'observation passe périodiquement par une position de focalisation. Cette position est continuellement évaluée par un ordinateur qui, lorsque la distance requise est atteinte, déclenche l'acquisition de l'image et l'impulsion d'éclairage laser.

La vitesse de ligne et la périodicité de focalisation permettent une fréquence d'acquisition théorique minimum de 1 à 3 images par seconde.

Le traitement et l'analyse d'images

Les images acquises sont traitées et analysées en temps réel. Dans un premier temps, le traitement consiste à s'affranchir de toute variation de niveau moyen d'éclairage ou de réflectivité du produit par élimination d'arrière-plan. Ensuite, l'image étant divisée en l*m zones, un paramètre de netteté $n_i$ est évalué pour chaque zone et un coefficient de netteté total p est également calculé.

Une série d'opérations permet enfin d'isoler et de qualifier les différents objets présents dans l'image. Si un objet appartient à une zone floue ($n_i$ < seuil de netteté L), il est éliminé du comptage. Les objets restants sont finalement triés en fonction de leur surface et de leurs dimensions, et leur nombre respectif est pondéré par le coefficient de netteté total p mentionné plus haut.

Suivant une modalité de mise en oeuvre du procédé, objet de la présente invention, on élimine l'influence perturbatrice de l'arrière plan en réévaluant régulièrement la réponse du système en calculant une image formée en attribuant à chaque pixel la moyenne arithmétique de la valeur des pixels correspondants obtenue sur la totalité des images considérées, par exemple 50 images. Cette moyenne correspond à une image de l'arrière-plan commun à toutes les images acquises et on soustrait pixel par pixel de chaque image acquise ladite moyenne afin d'en uniformiser l'illumination, ce qui permet d'exploiter des images prises même lors de la dérive de certains composants constitutifs du système de mesure, tels que le laser, la caméra, ..., éventuellement on calcule cet arrière-plan lors de l'initialisation du système ou de manière permanente, une nouvelle image étant disponible toutes les 0.5 sec.

Suivant une autre modalité de mise en oeuvre du procédé, objet de la présente invention, d'une part, on divise l'image obtenue après uniformisation de l'illumination en l*m zones, par exemple de dimension (768/ l)*(576/ m) pixels, et on calcule sur chacune des zones i un paramètre de netteté $n_i$ utilisant les transitions d'un pixel au pixel adjacent en faisant la somme des valeurs absolues des différences de niveau d'un pixel au pixel adjacent pour obtenir ce paramètre de netteté $n_i$ et on mémorise lesdits paramètres $n_i$ en vue d'une utilisation ultérieure, et d'autre part, on établit un coefficient de netteté total p sur base d'un test sur chaque zone, enfin, on compare chaque paramètre de netteté $n_i$ à une valeur seuil préalablement déterminée en fonction du produit inspecté, et on compte que la zone i intervient pour 0 si le paramètre de netteté $n_i$ est inférieur à ce seuil, et on compte que la zone i intervient pour $1/(l*m)^{ème}$ dans le coefficient de netteté total p dans le cas contraire.

Suivant une autre modalité de mise en oeuvre préférentielle du procédé, objet de la présente invention, on binarise l'image obtenue après l'opération d'élimination de l'arrière-plan sur base d'une méthode d'entropie maximale qui consiste à optimiser la quantité d'information contenue dans l'image résultante, ce qui donne lieu à un nombre maximum d'objets qui sont discriminés et peuvent être évalués et on détermine et classe les objets présents dans l'image binarisée en vue de détecter les éléments caractéristiques de la structure, tels que les cristaux, en établissant la liste des objets présents dans l'image résultante.

Suivant encore une autre modalité de mise en oeuvre préférentielle du procédé, objet de la présente invention, dans laquelle on inspecte une bande d'acier galvannealed, on calcule la surface, le centre de gravité, la largeur et la hauteur de l'ellipse d'inertie pour chaque objet ; on réalise pour tout objet répertorié les tests suivants :

   a. on élimine l'objet si le centre de gravité de l'objet appartient à une zone considérée comme floue sur base que

le coefficient $n_i$ établi ci-dessus est inférieur à un seuil prédéfini;

b. on élimine l'objet s'il est une ligne horizontale d'une épaisseur comprise entre 1 et 3 pixels, de préférence d'un pixel d'épaisseur, car il est considéré comme correspondant à un parasite;

c. on compte l'objet dans les très gros objets si la surface de l'objet est supérieure ou égale à un seuil prédéfini appelé "VeryBigArea$_{Thres}$"seton le type d'acier galvannealed;

d. on compte l'objet dans les gros objets si la surface de l'objet est supérieure ou égale au seuil prédéfini "BigArea$_{Thres}$" et inférieure au seuil "VeryBigArea$_{Thres}$" selon le type d'acier galvannealed ;

e. on compte l'objet dans les petits objets si la surface de l'objet est inférieure au seuil prédéfini "SmallArea$_{Thres}$" prédéfini selon le type d'acier galvannealed ;

f. Si les points c, d et e ne sont pas vérifiés, on détermine le rapport (hauteur d'objet/largeur d'objet) et on compte seulement les cristaux dont le rapport est compris entre 0.2 et 0.5, préférentiellement 0,3, afin de déterminer les cristaux ζ présents dans l'image.

Les cristaux ζ possèdent une largeur d'environ 1 μm minimum et peuvent atteindre 20 μm de longueur, soit un rapport de 0.05. Les cristaux détectés en surface sont ceux qui reflètent la lumière dans la bonne direction pour être observés. Or, tous ces cristaux ne sont pas dans un plan horizontal mais ils peuvent se trouver dans des plans d'orientations diverses. Par conséquent, le rapport de leur largeur à leur longueur peut varier lorsqu'ils sont observés uniquement dans une direction perpendiculaire à la surface.

Une étude sur images électroniques (profondeur de champ importante) montre que les cristaux sont orientés aléatoirement et qu'il n'existe pas de direction privilégiée.

Accepter un rapport supérieur à 0.05 comme critère d'acceptation permet de prendre en compte des cristaux de directions non contenues exclusivement dans des plans perpendiculaires à l'axe optique du système. Ceci augmente le nombre de cristaux détectés et améliore la précision du système. L'expérience montre que ce rapport ne peut cependant excéder 0.3 car d'autres objets, qui ne sont pas des cristaux ζ, sont comptés comme tels et dispersent la mesure.

Suivant une modalité de mise en oeuvre du procédé, objet de la présente invention, on mesure la réflectance à l'endroit observé par le microscope, on analyse au moins deux valeurs obtenues pour des longueurs d'ondes prédéfinies, préférentiellement on calcule le rapport des valeurs obtenues.

Cette manière de procéder permet d'opérer simultanément plusieurs types de mesures (poudrage, taux de fer, ...) on-line sur une bande d'acier galvanisée, afin d'en obtenir les caractéristiques du revêtement. On analyse d'une part l'image obtenue via un microscope et on en valide la portée en faisant intervenir des mesures pyrométriques, lesquelles offrent une possibilité d'extrapolation très fiable des résultats obtenus sur base de l'image microscopique à la largeur totale de la bande inspectée.

En outre, on a constaté que lors de l'inspection de la surface d'une bande galvannealed, il est difficile d'appliquer le procédé de mesure, objet de la présente invention, de par un effet de saturation des mesures dû à une proportion trop élevée de fer dans l'alliage de revêtement analysé.

Suivant une modalité de mise en oeuvre préférentielle du procédé, objet de la présente invention, on procède à des mesures pyrométriques dans les longueurs d'ondes de 0,85 ± 0,05 μm et 1,1 ± 0,05 μm et on utilise ladite mesure pour valider le résultat obtenu par mesure d'images.

L'opération de validation s'entend comme un moyen pour déclarer une mesure par images comme ayant trait à la zone (% Fe) dans laquelle la méthode de mesure de la présente invention est d'application.

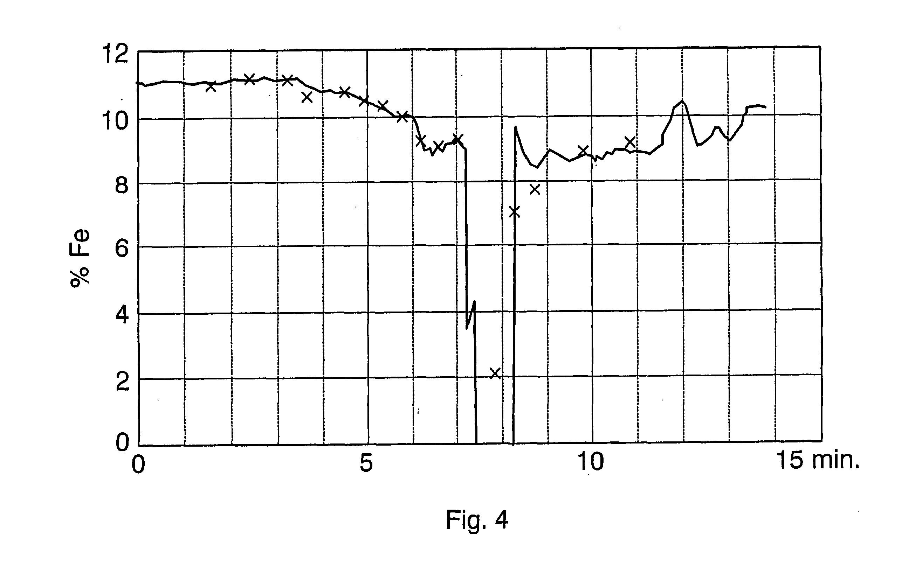

A titre d'exemple, on procède comme suit pour établir la corrélation avec le pourcentage de fer et le poudrage. La figure 4 montre deux graphiques, l'un représentatif du pourcentage de fer dosé chimiquement (valeurs identifiées par des points en X), et l'autre issu du calcul de l'application de la méthode de la présente invention (valeurs identifiées par un trait continu).

La figure 4 est la représentation d'une mesure du pourcentage en fer présentant en abscisse le temps et en ordonnée le pourcentage de fer.

On a constaté que pour les revêtements présentant un pourcentage en fer inférieur à 7 ou supérieur à 12, le procédé, objet de la présente invention, tel que décrit précédemment, présentait une limitation dans sa manière d'être mis en oeuvre industriellement. Cette limitation est liée à un changement de la surface inspectée, à savoir :

- pour un taux de fer inférieur à 7 %, on constate une absence d'objets liés aux cristaux et pouvant être qualifiés comme précédemment ;
- pour un pourcentage de fer supérieur à 12 %, on constate que les images obtenues ne sont plus différentiables des images obtenues pour une teneur en fer de 12 %, l'aspect de la surface du produit n'étant plus sensible à un accroissement du taux en fer.

Utilisant le nombre de cristaux ζ précédemment défini et le nombre de petits objets (small area Thres), 2 corrélations sont établies.

La première avec le pourcentage de fer, la seconde avec le poudrage.

Les coefficients de corrélation ainsi obtenus sont de l'ordre de 0.84.

Les petits objets peuvent être interprétés comme cristaux $\zeta$ ou comme partie de surface insuffisamment alliée. Plus le pourcentage de fer est élevé, plus le poudrage est élevé, et plus le nombre de cristaux $\zeta$ présents en surface diminue.

La gamme de mesure pour le pourcentage de fer est de 7-12%. En dehors de cette gamme, le capteur optique associé invalide la mesure.

*Dispositif pour la mise en oeuvre du procédé.*

La présente invention a aussi trait à un dispositif pour la mise en oeuvre du procédé décrit ci-dessus.

Le dispositif de mise en oeuvre du procédé de caractérisation en ligne d'une surface en mouvement, en particulier la surface d'une bande en acier en défilement continu ayant subi un traitement de galvannealing, objet de la présente invention, suivant l'une ou l'autre des modalités précitées, est essentiellement caractérisé en ce qu'on utilise un microscope industriel équipé d'un objectif de grossissement compris entre 5x et 30x à grande distance de travail, c'est-à-dire supérieure à 10 mm, à profondeur de champ la plus importante possible avec un minimum égal ou supérieur à la moitié de la rugosité pointe à pointe, en général 15 $\mu$m, comprenant une lentille d'adaptation caméra de grossissement compris entre 2.5x et 5x, une caméra CCD qui, couplée à l'objectif et à la lentille d'adaptation, fournit un champ de vision entre 125 $\mu$m et 2000 $\mu$m de large avec essentiellement une résolution spatiale du système d'au moins 0.5 $\mu$m, l'ensemble objectif et lentille devant être adaptés à l'application en fonction du champ de vision et de la résolution spatiale requise, ledit microscope comprenant un éclairage de type champ clair (bright field) et/ou champ sombre (dark field) constitué d'un laser pulsé, par exemple un laser YAG à 532 nm, énergie réglable jusqu'à 10 mJ, avec un un temps d'éclairage réglable de 0 à 10 ns, comprenant une fibre optique couplant la sortie laser à l'entrée éclairage du microscope, ladite fibre étant associée à 2 diffuseurs l'un placé entre la sortie du laser et l'entrée de la fibre optique, l'autre entre la sortie de la fibre optique et l'entrée éclairage du microscope, comprenant un capteur de distance (type triangulation laser) de grande précision (au moins 1/5 de la profondeur de champ) et de grande répétabilité (au moins 1/5 de la profondeur de champ, de préférence 1 $\mu$m minimum), placé à une distance de 10 mm minimum de la surface de la bande et mesurant des variations dans un intervalle d'au moins -2 mm à +2 mm, ledit capteur étant monté de sorte que la zone visée par ce capteur corresponde à la zone observée par le microscope, enfin un moteur monté sur le réglage Z (l'axe Z correspondant à l'axe optique du système) du microscope afin de focaliser correctement le système.

Suivant une autre modalité de mise en oeuvre du dispositif, objet de la présente invention, on utilise au moins une table de rotation motorisée présentant une précision et une répétabilité d'au minimum 0.6°+/- 0.1 ° afin de positionner l'axe optique du système dans un plan perpendiculaire au plan d'observation.

Suivant encore une autre modalité de mise en oeuvre du dispositif, objet de la présente invention, on utilise un capteur dont la précision minimale requise est, dans le cas de l'observation du revêtement galvannealed de 1/5 de la profondeur de champ, par exemple 1,4 $\mu$m.

La description qui suit est volontairement axée sur l'application du procédé de caractérisation d'une surface, objet de la présente invention, dans le cadre de l'inspection d'une surface d'une bande en acier galvannealed. Ce choix vise à simplifier la description et n'est en aucune manière une limitation quant aux domaines d'application du dispositif en cause.

La description fera référence aux figures annexées sur lesquelles certains éléments sont repérés.

Suivant une modalité de mise en oeuvre préférentielle du dispositif de mise en oeuvre du procédé, objet de la présente invention, ledit dispositif comporte au moins les éléments suivants :

- un microscope industriel équipé d'un objectif 20x à grande distance de travail (20 mm) et à profondeur de champ de 7 $\mu$m ainsi que d'une lentille d'adaptation caméra de 5x;
- Une caméra CCD 768 x 576 pixels, qui, couplée à l'objectif et à la lentille d'adaptation, fournit un champ de vision de 250 x 190 $\mu$m, avec une résolution spatiale finale de 0.5 $\mu$m minimum;
- un éclairage de type champ clair (bright field) et/ou champ sombre (dark field) constitué d'un laser pulsé YAG à 532 nm, énergie réglable jusqu'à 10 mJ, avec un temps d'éclairement réglable de 0 à 10 ns, d'une fibre optique couplant la sortie laser à l'entrée éclairage du microscope, de 2 diffuseurs, préférentiellement en verre dépoli, l'un placé entre la sortie du laser et l'entrée de la fibre optique, l'autre entre la sortie de la fibre optique et l'entrée éclairage du microscope ; le premier diffuseur d'une part élargissant le faisceau laser et cassant une partie de sa cohérence, évitant ainsi d'attaquer l'entrée de la fibre avec un faisceau trop concentré et donc de la détériorer ; le second diffuseur élargissant de nouveau le faisceau laser et cassant également une partie de sa cohérence, le couplage des 2 diffuseurs et de la fibre optique permettant de casser suffisamment la cohérence du faisceau laser et donc d'éviter un phénomène d'interférences au niveau de l'image formée ;
- un capteur de distance (type triangulation laser) de grande précision (0.5 $\mu$m minimum) et de grande répétabilité (1 $\mu$m minimum), placé à une distance de 10 mm minimum de la surface de la bande en acier en défilement et mesurant des variations dans un intervalle de -2 à +2 mm, ce capteur étant monté obliquement afin que la zone visée par ce capteur corresponde à la zone observée par le microscope ;

- un moteur monté sur le réglage Z du microscope afin de focaliser correctement le système ;

- une table de rotation motorisée (B) sert de support à l'ensemble précité associé au microscope industriel, ladite table motorisée présente une précision et une répétabilité d'au minimum 0.6° afin de positionner l'axe optique Z du système dans un plan perpendiculaire au plan d'observation ;

- une seconde table de rotation motorisée (C) de précision et de répétabilité d'au minimum 0.6° supporte la première table (B) afin de positionner l'axe optique perpendiculairement au plan d'observation ;

- un ordinateur qui commande l'ensemble formé par les différentes parties A, B et C... et comprend une carte d'acquisition d'images ('frame grabber'), capable de travailler avec des caméras en fonctionnement reset asynchrone; une carte d'entrées/sorties analogiques et digitales, avec une résolution de 16 bits sur les entrées analogiques; une carte de commandes des 3 moteurs mentionnés ci-dessus ; un programme d'acquisition et de traitement de données ; la résolution de la carte d'entrées/sorties étant requise pour le signal de distance fourni par le capteur de triangulation laser doit permettre d'atteindre une précision d'au moins 1,4 $\mu$m nécessaire au bon positionnement et à la bonne focalisation de l'image requis par la faible profondeur de champ de l'objectif utilisé ;

- un rouleau sur lequel le produit inspecté est appliqué par l'effet de traction opéré sur la bande lors du défilement ou par un moyen distinct approprié assurant cette fonction, ledit rouleau est positionné face à l'ensemble comprenant le microscope et ses deux tables de positionnement, préférentiellement, l'axe optique du système passe par le centre du cylindre et est positionné à un endroit du rouleau où le produit épouse parfaitement la forme du cylindre et donc où la position de sa surface n'est fonction que de la position du rouleau et du type de produit ;

- un capteur optique est associé au microscope, ledit capteur ayant pour objet, dans le cadre de la mesure de pourcentage de fer et de poudrage des tôles galvannealed, de valider la mesure obtenue par traitement d'images en dehors de l'intervalle 7%-12% de fer ; la validation consiste en un couplage des informations fournies d'une part par analyse de l'image obtenue par le microscope et par les mesures pyrométriques mettant en oeuvre le capteur optique.

L'analyse des mesures pyrométriques donne des informations complémentaires par exemple sur la structure, et permet de valider les mesures obtenues via le microscope sur l'ensemble de la largeur de la bande.

*Conclusions*

Le procédé de la présente invention permet donc d'effectuer un contrôle du galvannealing sous deux formes différentes. D'une part, il permet de fermer la boucle de régulation du chauffage par une mesure directe du taux de fer atteint dans le revêtement examiné, plutôt que par une mesure indirecte de la température comme c'est le cas de certaines méthodes traditionnelles connues, et d'autre part, il permet de situer le point de fonctionnement du procédé de galvannealing en fonction de la phase obtenue en surface et non pas du % de fer réalisé, ledit % de fer étant obtenu dans les méthodes connues par analyse ultérieure du produit et non pas par mesure directe en ligne au cours du traitement.

On notera aussi qu'en adaptant certains paramètres tels que le grossissement (changement d'objectif et/ou de lentille intermédiaire), la caméra (utilisation d'une caméra couleur, d'une caméra à haute résolution spatiale), l'éclairage (utilisation d'un ou plusieurs lasers de longueurs d'onde différentes pour l'éclairage), on peut appliquer le procédé de caractérisation d'une surface en défilement, objet de la présente invention, à d'autres domaines d'application, comme par exemple, la qualification de rugosité déterministe, la quantification des cratères (forme, profondeur), la détermination du fleurage, la détection d'oxydes en surface, le contrôle du pelage (détection des fissures et du pelage de la couche d'oxyde), l'observation de cylindres de laminage à chaud pour détecter les carbures, les fissures profondes, les fines fissures et réseaux de fissures, habituellement plus difficiles à observer, en bref, bon nombre de défauts et de caractéristiques observables à la surface de tous types de matériaux.

**Revendications**

1. Procédé de caractérisation en ligne d'une surface (S) en mouvement, de préférence une tôle galvanisée, mettant en oeuvre principalement .

    - un premier ensemble appelé ensemble A consistant en au moins un microscope industriel (1) équipé d'un objectif à grande distance de travail (2), une lentille d'adaptation caméra, un appareil de prise de vue (3) avec une sortie analogique ou digitale, un éclairage de type champ clair et/ou champ sombre comprenant un laser (4), un capteur de distance (5), et un moteur agissant sur le déplacement linéaire selon l'axe (Z), c'est-à-dire le déplacement selon l'axe optique du microscope afin de permettre la focalisation correcte du système, ledit ensemble A étant monté sur un ensemble appelé ensemble D, lequel comprend deux éléments (B) et (c), ledit ensemble D permettant de positionner l'axe optique, c'est-à-dire (z), de manière perpendiculaire au plan contenant la surface (S) observée, préférentiellement ledit moyen consiste en au moins deux tables de rotation motorisées (B) et (C) permettant par leur action conjuguée de positionner l'axe optique (Z) du microscope perpendiculairement au plan d'observation contenant la surface (S) examinée, l'ensemble D portant l'ensemble A étant éventuellement pourvu d'un système antivibratoire, permettant d'isoler ledit ensemble de la charpente métallique, telle qu'existante en ligne industrielle de recuit continu et galvanisation, devant le supporter et soumise aux diverses vibrations souvent présentes dans ce type de procédé industriel ;
- un ensemble de moyens, comprenant un ordinateur permettant d'assurer au moins les opérations suivantes :

• contrôler les moyens de positionnement de l'axe optique, c'est-à-dire par exemple le ou les moteurs de réglage de la distance selon l'axe optique (Z) et de positionnement des tables (B) et (C),
• contrôler la distance entre l'objectif (2) du microscope et la surface (S) examinée,
• agir sur l'éclairage laser (4) précité,
• décider de la prise d'images et étant pourvu d'au moins une carte d'acquisition d'images 'frame grabber' apte à travailler avec des caméras en fonctionnement asynchrone,
• traiter et analyser des images,
• éventuellement, émettre un diagnostic et réaliser l'archivage des résultats,

de manière à effectuer au moins les opérations suivantes :
- on positionne le produit en mouvement comportant la surface (S) à caractériser de manière à pouvoir répéter ledit positionnement dans le temps;
- on positionne le microscope (1) de manière telle que l'axe optique (Z) soit perpendiculaire au plan comprenant la surface (S) examinée à l'échelle microscopique;
- on focalise le système optique de manière à obtenir une image nette ;
- on éclaire la surface à caractériser au moyen d'un éclairage laser (4) stroboscopique avec un temps d'éclairage dont la valeur est conforme au calcul suivant $t = d/v$ μs
avec

V : la vitesse linéaire du produit en m/s
d : la dimension d'un pixel de caméra rapportée au champ de vision, défini lui-même par la résolution requise pour l'application, dimension donnée en μm ;
et t est le temps nécessaire pour que le produit parcoure d μm,

la valeur de $t_{max}$ étant définie selon une règle de bonne pratique qui dit que pour figer un objet en mouvement, on doit l'éclairer pendant au maximum le temps nécessaire pour qu'il ait bougé de la distance de 1/4 de pixel, cela afin d'éviter un effet de flou dans l'image obtenue ;
- on utilise un moyen distinct pour casser la cohérence du faisceau servant à l'éclairage, ce moyen consistant en un ou plusieurs diffuseurs ;
- on effectue la prise d'au moins une image focalisé
- on procède à l'acquisition asynchrone d'images de la surface (S) au moyen d'une carte électronique de capture d'image 'frame grabber' ;
- on traite et analyse les images acquises en temps réel; le traitement et l'analyse des images acquises en temps réel comportant les sous-étapes suivantes:
- on affranchit l'image captée de toute variation de niveau moyen d'éclairage et/ou d'un effet de réflectivité de la surface par élimination de l'arrière-plan,
- on divise l'image acquise en l*m zones et on associée à chaque zone un paramètre de netteté ni,
- en relation avec la définition d'un critère de détermination de la qualité d'image, on calcule un coefficient de netteté total p qui sert de critère d'acceptation ou de refus de l'image considérée pour son traitement ultérieur, le dit coefficient p étant le suivant :

$$p = ( \Sigma p_i ) / ( l * m )$$
$$\text{avec } p_i = 0 \text{ si } n_i < L, \text{ sinon} \quad p_i = 1$$

où

L: $n_i$: coefficient de netteté calculé de la zone 1; seuil de netteté prédéfini, obtenu par étalonnage en laboratoire ou à partir d'un grand nombre d'images sur lesquelles on s'est affranchi de l'arrière-plan ;
$p_i$: coefficient de pondération de la zone i ;
p: coefficient de netteté total ;

- on élimine l'image analysée si le coefficient de netteté total est inférieur à une valeur déterminée comme minimum $p_{min}$, préférentiellement pmin étant égal à 0,5 ;
- on effectue une série d'opérations afin d'isoler et de qualifier les différents objets présents dans l'image acquises savoir:

- on procède à un premier tri desdits objets en considérant qu'on élimine un objet si ce dernier appartient à une zone floue c'est-à-dire répondant au critère $n_i$ < seuil de netteté prédéfini L;
- on effectue ensuite un second tri sur les objets restants en fonction de leur surface et de leurs dimensions,
- on pondère chaque nombre N d'objets trouvés dans une image et déterminés comme appartenant à un même ensemble par le coefficient de netteté total de sorte que:

$$N_{final} = N \: / \: p$$

où $N_{final}$ représente le nombre final d'objets considérés, en tenant compte des zones floues de l'image analysée ;
- on utilise les valeurs $N_{final}$ obtenues lors des opérations de tri précédentes pour déterminer les caractéristiques de la surface inspectée.

2. Procédé suivant la revendication 1, dans le cas de mise en oeuvre sur une bande en acier en défilement, **caractérisé en ce qu'**on positionne la bande en appliquant ladite bande par traction sur cette dernière sur la surface d'un rouleau.

3. Procédé suivant la revendication 2, dans le cas d'une bande d'acier en défilement et passant sur un cylindre (6), **caractérisé en ce qu'**on positionne le microscope (1) de manière telle que l'axe optique (Z) du système croise orthogonalement l'axe (7) du cylindre et est compris dans un segment d'arc compris entre la 1ère ligne de contact entre la bande supportant la surface (S) et le cylindre (6) et la dernière ligne de contact entre la bande supportant la surface (S) et le cylindre (6).

4. Procédé suivant les revendications 2 ou 3, dans le cas d'une bande d'acier en défilement et passant sur un cylindre, étant donné que ledit cylindre présente toujours un faux rond lié aux tolérances de construction, la distance objectif/plan d'observation varie suivant un cycle temporel qui est fonction de la vitesse de défilement en ligne à l'endroit d'inspection, **caractérisé en ce qu'**on procède à l'acquisition d'images de la surface (S) en positionnant le système de sorte que la distance de focalisation soit dans l'intervalle de variation de distance lié au faux rond du cylindre de manière à ce que la surface d'observation passe périodiquement par une position de focalisation.

5. Procédé suivant la revendication 1, dans le contexte de l'analyse d'une bande d'acier galvannealed, **caractérisé en ce que** 1 et m sont compris entre 6 et 10.

6. Procédé suivant une ou plusieurs des revendications 1 à 5, **caractérisé en ce qu'**on élimine l'influence perturbatrice de l'arrière plan en réévaluant régulièrement la réponse du système en calculant une image formée en attribuant à chaque pixel la moyenne arithmétique de la valeur des pixels correspondants obtenue sur la totalité des images considérées.

7. Procédé suivant une ou plusieurs des revendications 1 à 6, **caractérisé en ce que** le paramètre de netteté ni est calculé en utilisant les transitions d'un Pixel au pixel adjacent en faisant la comme des valeurs absolues des différences de niveau d'un pixel au pixel adjacent pour obtenir ce paramètre de netteté ni et **en ce qu'**on mémorise lesdits paramètres ni en vue d'une utilisation ultérieure, **en ce qu'**on établit un coefficient de netteté total p sur base d'un test sur chaque zone.

8. Procédé suivant une ou plusieurs des revendications 1 à 7, **caractérisé en ce qu'**on binarise l'image obtenue après l'opération d'élimination de l'arrière-plan sur base d'une méthode d'entropie maximale qui consiste à optimiser la quantité d'information contenue dans l'image résultante, ce qui donne lieu à un nombre maximum d'objets qui sont discriminés et peuvent être évalués et **en ce qu'**on détermine et classe les objets présents dans l'image binarisée en vue de détecter des éléments caractéristiques de la structure, tels que des cristaux, en établissant la liste des objets présents dans l'image résultante.

**9.** Procédé suivant une ou plusieurs des revendications 1 à 8, **caractérisé en ce qu'**on inspecte une bande d'acier galvannealed, **en ce qu'**on calcule la surface, le centre de gravité, la largeur et la hauteur de l'ellipse d'inertie pour chaque objet, **en ce qu'**on réalise pour tout objet répertorié les tests suivants :

a. on élimine l'objet si le centre de gravité de l'objet appartient à une zone considérée comme floue sur base que le coefficient ni établi ci-dessus est inférieur à un seuil prédéfini;

b. on élimine l'objet s'il est une ligne horizontale d'une épaisseur comprise entre 1 et 3 pixels, de préférence d'un pixel d'épaisseur, car il est considéré comme correspondant à un parasite;

c. on compte l'objet dans les très gros objets si la surface de l'objet est supérieure ou égale à un seuil prédéfini appelé "VeryBigAreaThres" selon le type d'acier galvannealed;

d. on compte l'objet dans les gros objets si la surface de l'objet est supérieure ou égale au seuil prédéfini "BigAreaThres" et inférieure au seuil "VeryBigAreaThres" selon le type d'acier galvannealed ;

e. on compte l'objet dans les petits objets si à surface de l'objet est inférieure au seuil prédéfini "SmallAreaThxes" prédéfini selon le type d'acier galvannealed ;

f. si les points c, d et e ne sont pas vérifiés, on détermine le rapport hauteur d'objet/largeur d'objet et on compte seulement les cristaux dont le rapport est compris entre 0.2 et 0.5, préférentiellement 0,3, afin de déterminer les cristaux $\zeta$ présents dans l'image.

**10.** Procédé suivant une ou plusieurs des revendications 1 à 9, **caractérisé en ce qu'**on mesure la réflectance à l'endroit observé par le microscope, on analyse au moins deux valeurs obtenues pour des longueurs d'ondes prédéfinies ; préférentiellement on calcule le rapport des valeurs obtenues.

**11.** Procédé suivant la revendication 10, **caractérisé en ce qu'**on procède à des mesures pyrométriques dans les longueurs d'ondes de 0,85 $\pm$ 0,05 $\mu$m et 1,1 $\pm$ 0,05 $\mu$m et **en ce qu'**on utilise ladite mesure pour valider le résultat obtenu par mesure d'images.

**12.** Dispositif de mise en oeuvre du procédé de caractérisation en ligne d'une surface en mouvement, en particulier la surface d'une bande en acier en défilement continu ayant subi un traitement de galvannealing, suivant l'une ou l'autre des revendications 1 à 11, comprenant un microscope industriel équipé d'un objectif de grossissement compris entre 5x et 30x à grande distance de travail, c'est-à-dire supérieure à 10 mm, à profondeur de champ la plus importante possible avec un minimum égal ou supérieur à la moitié de la rugosité pointe à pointe, en général 15 $\mu$m, comprenant une lentille d'adaptation caméra de grossissement compris entre 2.5x et 5x, une caméra CCD qui, couplée à l'objectif et à la lentille d'adaptation, fournit une champ de vision entre 125 $\mu$m et 2000 $\mu$m de large avec essentiellement une résolution spatiale du système d'au moins 0.5 $\mu$m, l'ensemble objectif et lentille devant être adaptés à l'application en fonction du champ de vision et de la résolution spatiale requise, ledit microscope comprenant un éclairage de type champ clair et/ou champ sombre constitué d'un laser pulsé, d'énergie réglable jusqu'à 10 mJ, avec un un temps d'éclairage réglable de 0 à 10 ns, comprenant une fibre optique couplant la sortie laser à l'entrée éclairage du microscope, comprenant un capteur de distance de type triangulation laser de grande précision à savoir au moins 1/5, de la profondeur de champ et de grande répétabilité, a savoir au moins 1/5 de la profondeur de champ, de préférence 1 $\mu$m minimum, placé à une distance de 10 mm minimum de la surface de la bande et mesurant des variations dans un intervalle d'au moins -2 mm à +2 mm, ledit capteur étant monté de sorte que la zone visée par ce capteur corresponde à la zone observée par le microscope, enfin un moteur monté sur le réglage Z, l'axe Z correspondant à l'axe optique du système du microscope afin de focaliser correctement le système, et où ladite fibre est associée à 2 diffuseurs l'un placé entre la sortie du laser et l'entrée de la fibre optique, l'autre entre la sortie de la fibre optique et l'entrée éclairage du microscope, le dispositif comprenant en outre un ordinateur adapté pour réaliser les étapes d'acquisition et d'analyse des images obtenues définies dans l'une des revendications 1 à 11.

**13.** Dispositif suivant la revendication 12, **caractérisé en ce qu'**on utilise au moins une table de rotation motorisée présentant une précision et une répétabilité d'au minimum 0.6°+/ 0.1° afin de positionner l'axe optique du système dans un plan perpendiculaire au plan d'observation.

**14.** Dispositif suivant les revendications 12 ou 13, **caractérisé en ce qu'**on utilise un capteur dont la précision minimale requise est, dans le cas de l'observation du revêtement galvannealed de 1/5 de la profondeur de champ.

**15.** Dispositif suivant l'une ou l'autre des revendications 12 à 14, **caractérisé en ce qu'**il comporte au moins les éléments suivants :

- une microscope industries équipé d'un objectif 20x à grande distance de travail de 20 mm et à profondeur de champ de 7 $\mu$m ainsi que d'une lentille d'adaptation caméra de 5x;
- une caméra CCD 768 x 576 pixels, qui, couplée à l'objectif et à la lentille d'adaptation, fournit un champ de vision de 250 x 190 $\mu$m , avec une résolution spatiale finale de 0.5 $\mu$m minimum;
- un éclairage de type champ clair et/ou champ sombre constitué d'un laser pulsé YAG à 532 nm, énergie réglable jusque 10 mJ, avec un temps d'éclairement réglable de 0 à 10 ns, d'une fibre optique couplant la sortie laser à l'entrée éclairage du microscope, de 2 diffuseurs, préférentiellement en verre dépoli, l'un placé entre la sortie du laser et l'entrée de à fibre optique, l'autre entre la sortie de la fibre optique et l'entrée éclairage du microscope ; le premier diffuseur d'une part élargissant le faisceau laser et cassant une partie de sa cohérence, évitant ainsi d'attaquer l'entrée de la fibre avec un faisceau trop concentré et donc de la détériorer ; le second diffuseur élargissant de nouveau le faisceau laser et cassant également une partie de sa cohérence, le couplage des 2 diffuseurs et de la fibre optique permettant de casser suffisamment la cohérence du faisceau laser et donc d'éviter un phénomène d'interférences au niveau de l'image formée ;
- un capteur de distance de type triangulation laser de grande précision de 0.5 $\mu$m minimum et de grande répétabilité de 1 $\mu$m minimum, placé à une distance de 10 mm minimum de la surface de la bande en acier en défilement et mesurant des variations dans un intervalle de -2 à +2 mm, ce capteur étant monté obliquement afin que la zone visée par ce capteur corresponde à la zone observée par le microscope ;
- un moteur monté sur le réglage Z du microscope afin de focaliser correctement le système ;
- une table de rotation motorisée (B) sert de support à l'ensemble précité associé au microscope industriel, ladite table motorisée présente une précision et une répétabilité d'au minimum 0.6° afin de positionner l'axe optique Z du système dans un plan perpendiculaire au plan d'observation ;
- une seconde table de rotation motorisée (C) de précision et de répétabilité d'au minimum 0.6° supporte la première table (B) afin de positionner l'axe optique perpendiculairement au plan d'observation ;
- un ordinateur qui commande l'ensemble formé par les différentes parties A, B et C... et comprend une carte d'acquisition d'images 'frame grabber', capable de travailler avec des caméras en fonctionnement reset asynchrone; une carte d'entrées/sorties analogiques et digitales, avec une résolution de 16 bits sur les entrées analogiques; une carte de commandes des 3 moteurs mentionnés ci-dessus ; un programme d'acquisition et de traitement de données ; la résolution de la carte d'entrées/sorties étant requise pour le signal de distance fourni par le capteur de triangulation laser doit permettre d'atteindre une précision d'au moins 1,4 $\mu$m nécessaire au bon positionnement et à la bonne focalisation de l'image requis par la faible profondeur de champ de l'objectif utilisé ;
- un rouleau sur lequel le produit inspecté est appliqué par l'effet de traction opéré sur la bande lors du défilement ou par un moyen distinct approprié assurant cette fonction, ledit rouleau est positionné face à l'ensemble comprenant le microscope et ses deux tables de positionnement, préférentiellement, l'axe optique du système passe par le centre du cylindre et est positionné à un endroit du rouleau où le produit épouse parfaitement la forme du cylindre et donc où la position de sa surface n'est fonction que de la position du rouleau et du type de produit ;
- un capteur optique est associé au microscope, ledit capteur ayant pour objet, dans le cadre de la mesure de pourcentage de fer et de poudrage des tôles galvannealed, de valider la mesure obtenue par traitement d'images en dehors de l'intervalle 7%-12% de fer ; la validation consiste en un couplage des informations fournies d'une part par analyse de l'image obtenue par le microscope et par les mesures pyrométriques mettant en oeuvre le capteur optique.

**Claims**

**1.** Process for the on-line characterisation of a surface (S) in motion, preferably a galvanised sheet, principally implementing:

- a first assembly referred to as assembly A, comprising at least one industrial microscope (1) equipped with an objective (2) having a long working distance, a camera adaptation lens, an image-acquiring camera (3) with an analogue or digital output, an illumination device of the bright-field and/or dark-field type comprising a laser (4), a distance sensor (5) and a motor acting on the linear motion along the axis (Z), i.e. the motion along the optical axis of the microscope in order to allow the correct focussing of the system, said assembly A being mounted on an assembly referred to as assembly D, which comprises two elements (B) and (C), said assembly D allowing to position the optical axis, i.e. (Z), perpendicularly to the plane comprising the surface (S) under observation, said means preferably comprises at least two motor-driven rotation tables (B) and (C) allowing, by their joint action, to position the optical axis (Z) of the microscope perpendicularly to the observation plane comprising the surface (S) under examination, the assembly D carrying the assembly A being possibly provided with an anti-vibration system, allowing to isolate said assembly from the metal frame, such as found on an industrial line for the continuous annealing and galvanisation, which has to support it and is subjected to the various vibrations that are often present in this type of industrial process;

- an assembly of means, comprising a computer that allows to carry out at least the following operations:

> • monitoring the means for positioning the optical axis, i.e. for example the motor or motors for adjusting the distance along the optical axis (Z) and for positioning the tables (B) and (C),
> • monitoring the distance between the objective (2) of the microscope and the surface (S) under examination,
> • acting on the above-mentioned laser illumination device (4),
> • deciding on the images to be taken and being provided with at least one frame grabber card that can operate with cameras in asynchronous operation,
> • processing and analysing images,
> • possibly emitting diagnostic information and archiving the results,

so that at least the following operations are carried out:

- the product in motion comprising the surface (S) to be **characterised** is positioned in such a way as to allow said positioning to be repeated over time;
- the microscope (1) is positioned in such a way that the optical axis (Z) is perpendicular to the plane comprising the surface (S) under examination on a microscopic scale;
- the optical system is focussed in such a way as to obtain a sharp image;
- the surface to be **characterised** is illuminated by means of a stroboscopic laser illumination device (4) with an illumination time whose value conforms to the following calculation:

$$t = d/V \ \mu s$$

where

V is the linear velocity of the product in m/s
d is the dimension of a camera pixel referred to the vision field, itself defined by the resolution required for the application, the dimension being given in $\mu$m;
and t is the time required for the product to travel d $\mu$m,
the value of $t_{max}$ being defined according to a rule of good practice which states that in order to freeze an object in motion, it must be illuminated for no more than the time necessary for it to have moved by a distance of 1/4 of a pixel, this in order to avoid a blurred effect in the image obtained;

- a separate means is used to break the coherence of the beam used for the illumination, this means preferably comprising one or more diffusers;
- at least one focussed image is taken;
- images of the surface (S) are asynchronously acquired by means of an electronic frame grabber card;
- the acquired images are processed and analysed in real time;
the images acquired in real time are processed and analysed by the following sub-steps:
- the image captured is freed from any variation in the average illumination level and/or from a reflectivity effect of the surface by eliminating the background,
- the image acquired is divided into l*m zones and each zone is assigned a sharpness parameter $n_i$,
- in relation to the definition of a criterion for determining the quality of the image, a total sharpness coefficient p is calculated and serves as the criterion for accepting or refusing the image considered for its subsequent processing, said p coefficient being:

$$p = (\Sigma p_i)/(l*m)$$

where $p_i = 0$, if $n_i < L$, otherwise $p_i = 1$
where
$n_i$ is the calculated sharpness coefficient of the zone i;
L is the predefined sharpness threshold obtained by calibration in a laboratory or from a large number of images from which the background has been removed;
$p_i$ is the weighting coefficient of the zone i;
p is the total sharpness coefficient;
- the analysed image is eliminated if the total sharpness coefficient is less than a value determined as the minimum $p_{min}$; $p_{min}$ preferably being 0.5;
- a series of operations is performed in order to isolate and qualify the various objects present in the acquired image, namely

   - a first sorting operation is performed on said objects by considering that an object is eliminated if it belongs to a blurred zone, i.e. a zone meeting the criterion $n_i <$ predefined sharpness threshold L;
   - a second sorting operation is then performed on the remaining objects according to their surface and dimensions,

- each number N of objects found in an image and determined as belonging to a same assembly is weighted with the total sharpness coefficient in such a way that:

$$N_{final} = N/p$$

where $N_{final}$ represents the final number of objects considered, taking into account the blurred zones of the analysed image;
- the $N_{final}$ values obtained during the preceding sorting operations are used to determine the characteristics of the inspected surface.

2. Process according to Claim 1, in the case of the implementation on a steel strip in motion, **characterised in that** the strip is positioned by applying said strip, by tension on the latter, onto the surface of a roll.

3. Process according to Claim 2, in the case of a steel strip in motion passing onto a cylinder (6), **characterised in that** the microscope (1) is positioned in such a way that the optical axis (Z) of the system orthogonally crosses the axis (7) of the cylinder and is located in a arc segment enclosed between the first line of contact between the strip supporting the surface (S) and the cylinder (6) and the last line of contact between the strip supporting the surface (S) and the cylinder (6).

4. Process according to Claims 2 or 3, in the case of a steel strip in motion passing onto a cylinder, given that said cylinder always has an eccentricity linked to the design tolerances, the distance between the objective and the observation plane varies according to a time cycle which is a function of the linear speed of motion at the inspection point, **characterised in that** images of the surface (S) are acquired by positioning the system in such a way that the focussing distance is within the interval of distance variation linked to the eccentricity of the cylinder so that the observation surface periodically passes through a focussing position.

5. Process according to Claim 1, in the context of the analysis of a galvannealed steel strip, **characterised in that** 1 and m are between 6 and 10.

6. Process according to one or several of Claims 1 to 5, **characterised in that** the disturbing influence of the background is eliminated by regularly re-evaluating the response of the system by calculating an image formed by attributing to each pixel the arithmetic average of the value of the corresponding pixels obtained for all the images under consideration.

7. Process according to one or several of Claims 1 to 9, **characterised in that** the sharpness parameter ni is calculated by using the transitions from one pixel to the adjacent pixel by summing the absolute values of the differences in level from one pixel to the adjacent pixel in order to obtain this sharpness parameter ni, and **in that** said parameters ni are stored for subsequent use, **in that** a total sharpness coefficient p is established on the basis of a test on each zone.

8. Process according to one or several of Claims 1 to 7, **characterised in that** the obtained image is binarised after the background is eliminated on the basis of a maximum entropy method, which consists in optimising the quantity of information contained in the resulting image, which gives rise to a maximum number of objects being discriminated and can be evaluated, and **in that** the objects present in the binarised image are determined and classified with a view to detecting the characteristic elements of the structure, such as crystals, by establishing the list of the objects present in the resulting image.

9. Process according to one or several of Claims 1 to 8, **characterised in that** a galvannealed steel strip is inspected, **in that** the surface area, the centre of gravity, the width and height of the inertia ellipse are calculated for each object, **in that** the following tests are carried out for each recorded object:

   a. the object is eliminated if the centre of gravity of the object belongs to a zone considered as blurred on the basis that the above-established coefficient ni is less than a predefined threshold;
   b. the object is eliminated if it is a horizontal line of a thickness between 1 and 3 pixels, preferably one pixel thick, since it is considered as corresponding to a parasitic image;
   c. the object is counted as very large if the surface area of the object is greater than or equal to a predefined threshold referred to as "VeryBigAreaThres", depending on the type of galvannealed steel;
   d. the object is counted as large if the surface area of the object is greater than or equal to the predefined threshold "BigAreaThres" and less than the threshold "VeryBigAreaThres", depending on the type of galvannealed steel;
   e. the object is counted as small if the surface area of the object is less than the predefined threshold "SmallAreaThres", predefined depending on the type of galvannealed steel;
   f. if points c, d and e are not verified, the ratio (height of the object/width of the object) is determined and only the crystals with a ratio between 0.2 and 0.5, preferably 0.3, are counted in order to determine the crystals $\zeta$ present in the image.

10. Process according to one or several of Claims 1 to 9, **characterised in that** the reflectance is measured at the location observed by the microscope, at least two values obtained for predetermined wavelengths are analysed; the ratio of the values obtained is preferably calculated.

11. Process according to Claim 10, **characterised in that** pyrometric measurements are carried out at wavelengths of $0.85 \pm 0.05$ $\mu$m and $1.1 \pm 0.05$ $\mu$m, and **in that** said measurement is used to validate the result obtained by image measurement.

12. Device for implementing the process for the on-line characterisation of a surface in motion, in particular the surface of a steel strip in continuous motion that has undergone a galvannealing treatment, according to any one of Claims 1 to 11, comprising an industrial microscope equipped with a magnification objective of between 5x and 30x and having a long working distance, i.e. greater than 10 mm, with the greatest possible field depth, the minimum being equal to or greater than half the point-to-point roughness, in general 15 $\mu$m, comprising a camera adaptation lens with a magnification of between 2.5x and 5x, a CCD camera which, coupled to the objective and the adaptation lens, provides a view field with a width of between 125 $\mu$m and 2000 $\mu$m with essentially a spatial resolution of the system of at least 0.5 $\mu$m, the objective/lens assembly having to be adapted to the application as a function of the view field and of the required spatial resolution, said microscope comprising an illumination device of the bright-field and/or dark-field type comprising a pulsed laser with an energy that can be adjusted up to 10 mJ, with an illumination time that can be adjusted from 0 to 10 ns, comprising an optical fibre coupling the laser output to the illumination input of the microscope, comprising a distance sensor of the laser triangulation type of high precision, namely at least 1/5 of the field depth and of high repeatability, namely at least 1/5 of the field depth, preferably 1 $\mu$m at the minimum, placed at a distance of at least 10 mm from the surface of the strip and measuring variations within an interval of at least -2 mm to +2 mm, said sensor being mounted in such a way that the zone aimed at by this sensor corresponds to the zone observed by the microscope, finally a motor mounted on the Z adjusting system, the Z axis corresponding to the optical axis of the system of the microscope in order to correctly focus the system, and where said fibre is associated with 2 diffusers, one placed between the output of the laser and the input of the optical fibre, the other between the output of the optical fibre and the illumination input of the microscope, the device moreover comprising a computer that is adapted to carry out the steps of acquiring and analysing the images obtained as defined in any one of Claim 1 to 11.

13. Device according to Claim 12, **characterised in that** at least one motor-driven rotation table with a precision and a repeatability of at least 0.6° +/- 0.1° is used in order to position the optical axis of the system in a plane that is perpendicular to the plane of observation.

14. Device according to Claims 12 or 13, **characterised in that** use is made of a sensor whose minimum required precision is 1/5 of the field depth, in the case of the observation of the galvannealed coating.

15. Device according to any one of Claims 12 to 14, **characterised in that** it comprises at least the following elements:

  - an industrial microscope equipped with a 20x objective having a long working distance of 20 mm and a field depth of 7 $\mu$m, as well as a 5x camera adaptation lens;
  - a 768 x 576-pixel CCD camera which, coupled to the objective and the adaptation lens, provides a view field of 250 x 190 $\mu$m with a final spatial resolution of at least 0.5 $\mu$m;
  - an illumination device of the bright-field and/or dark-field type comprising a 532-nm pulsed YAG laser with an energy that can be adjusted up to 10 mJ, with an illumination time that can be adjusted from 0 to 10 ns, an optical fibre coupling the laser output to the illumination input of the microscope, 2 diffusers, preferably made of ground glass, one placed between the output of the laser and the input of the optical fibre, the other between the output of the optical fibre and the illumination input of the microscope; the first diffuser on the one hand widening the laser beam and breaking part of its coherence, thus avoiding subjecting the input of the fibre to a beam that is too concentrated and hence damaging it; the second diffuser further widening the laser beam and likewise breaking part of its coherence, the coupling of the 2 diffusers and of the optical fibre allowing to sufficiently break the coherence of the laser beam and hence avoid an interference phenomenon at the level of the image formed;
  - a distance sensor of the laser triangulation type of high precision of at least 0.5 $\mu$m and of high repeatability of at least 1 $\mu$m placed at a distance of at least 10 mm from the surface of the steel strip in motion and measuring variations within an interval of -2 to +2 mm, this sensor being obliquely mounted to ensure that the zone aimed at by this sensor corresponds to the zone observed by the microscope;
  - a motor mounted on the Z adjusting system of the microscope in order to correctly focus the system;
  - a motor-driven rotation table (B) serves as a support for the above-mentioned assembly associated with the industrial microscope, said motor-driven table has a precision and a repeatability of at least 0.6° in order to position the optical axis Z of the system in a plane that is perpendicular to the observation plane;
  - a second motor-driven rotation table (C) with a precision and a repeatability of at least 0.6° supports the first table (B) in order to position the optical axis perpendicularly to the observation plane;
  - a computer, which controls the assembly formed by the various parts A, B and C... and comprises a frame grabber card capable of working with cameras in asynchronous reset operation; an analogue and digital input/output card with a resolution of 16 bits at the analogue inputs; a card for controlling the 3 above-mentioned motors; a data acquisition and processing program; the resolution of the input/output card being required for the distance signal supplied by the laser triangulation sensor must allow to reach a precision of at least 1.4 $\mu$m required for the correct positioning and focussing of the image required by the small field depth of the objective used;
  - a roll, on which the inspected product is applied by the tension effect imposed on the strip during its motion or by an appropriate separate means ensuring this function, said roll is positioned in front of the assembly comprising the microscope and its two positioning tables, the optical axis of the system preferably passes through the centre of the cylinder and is positioned at a location on the roll where the product perfectly hugs the shape of the cylinder and hence where the position of its surface is only a function of the position of the roll and of the type of product;
  - an optical sensor is associated with the microscope, the purpose of said sensor, within the context of measuring the percentage of iron and the powdering of the galvannealed sheets, being to validate the measurement obtained by image processing outside the interval of 7%-12% of iron; the validation consists in coupling the information supplied, on the one hand, by the analysis of the image obtained by the microscope and by the pyrometric measurements implementing the optical sensor.

**Patentansprüche**

1. Verfahren zur Online-Charakterisierung einer sich bewegenden Oberfläche (S), vorzugsweise eines galvanisierten Bleches, bei dem hauptsächlich Folgendes eingesetzt wird:

  - Eine erste Baugruppe, genannt Baugruppe A, die aus mindestens einem Industriemikroskop (1) besteht, das mit einem Objektiv mit großem Arbeitsabstand (2), einer anpassenden Kameralinse, einem Bildaufnahmegerät (3) mit analogem oder digitalem Ausgang, einer Beleuchtung vom Typ Hell- und/oder Dunkelfeld mit einem Laser (4), einem Entfernungssensor (5) sowie einem Motor ausgestattet ist, der auf die lineare Verschiebung entlang der Achse (Z) einwirkt, d. h auf die lineare Verlagerung gemäß der Optikachse des Mikroskops, um die korrekte Fokussierung des Systems zu ermöglichen, wobei die besagte Baugruppe A hierbei auf einer sog. Baugruppe D montiert ist, welche die beiden Elemente (B) und (C) umfasst, wobei es diese besagte Baugruppe D ermöglicht, die Optikachse, d.h. (Z) in senkrechter Weise zu der Ebene zu positionieren, die die beobachtete Fläche (S) enthält; vorzugsweise besteht die besagte Baugruppe aus mindestens zwei per Motor angetriebenen, drehbaren Tischen (B) und (C), die es durch ihre beugende Bewegung ermöglichen, die Optikachse (Z) des Mikroskops senkrecht zur die zu untersuchende Fläche (S) enthaltenden Beobachtungsebene zu positionieren; die die Baugruppe A tragende Baugruppe D ist eventuell mit einem vibrationshemmenden System ausgestattet, das es ermöglicht, die besagte Baugruppe gegenüber dem Metallgerüst zu isolieren, wie dies bei einer industriellen Bandglüh- und Galvanisierungsanlage vorhanden ist, bevor sie gestützt und den unterschiedlichen Vibrationen ausgesetzt ist, die oftmals bei dieser Art von Industrieverfahren vorhanden sind;
- eine mittlere Baugruppe, die einen Computer enthält, mit dessen Hilfe mindestens die folgenden Abläufe ausgeführt werden können:

- die Hilfsmittel zur Platzierung der Optikachse, d.h. z. B. den oder die Motoren zur Regelung des Abstandes gemäß der Optikachse (Z) und zur Positionierung der Tische (B) und (C)zu steuern;
- den Abstand zwischen dem Objektiv (2) des Mikroskops und der untersuchten Oberfläche (S) zu steuern;
- auf die vorgenannte Laserbeleuchtung (4) einzuwirken;
- die Bildaufnahme festzulegen; indem der Computer mit einer Bildaufnahmekarte "Frame Grabber" ausgestattet ist, muss er dazu geeignet sein, mit den Kameras in asynchroner Funktionsweise zusammenzuarbeiten.
- die Bilder zu bearbeiten und zu analysieren;
- eventuell eine Diagnose auszustellen und die Archivierung der Ergebnisse durchzuführen;

dies erfolgt in einer Weise, sodass mindestens die folgenden Abläufe ausgeführt werden:
- das sich bewegende Produkt, welches die zu charakterisierende Fläche (S) enthält, wird so positioniert, dass die besagte Positionierung zu einem späteren Zeitpunkt wiederholt werden kann;
- das Mikroskop (1) wird so platziert, dass die Optikachse (Z) senkrecht zu der Ebene steht, welche die im mikroskopischen Maßstab untersuchte Fläche (S) enthält;
- das optische System wird so fokussiert, dass sich ein klares Bild ergibt;
- die zu charakterisierende Fläche wird mithilfe einer stroboskopischen Laserbeleuchtung (4) mit einer Beleuchtungsdauer beleuchtet, deren Wert mit der folgenden Berechnung übereinstimmt:

$$t=d/V \ \mu s$$

mit

V: der linearen Geschwindigkeit des Produkts in m/s;
d: der Größe eines Pixels der Kamera;

im Verhältnis zum Sichtfeld, welches selbst durch die für die Anwendung erforderliche Auflösung definiert wird; die Auflösung wird in $\mu$m angegeben;
und t als der erforderlichen Zeit, damit das Produkt d $\mu$m durchläuft;
der Wert $t_{max}$ wird entsprechend der Regeln der bewährten Praxis definiert, um ein sich bewegendes Objekt erstarren zu lassen; dies muss während maximal der erforderlichen Zeit beleuchtet werden, damit es die Entfernung von 1/4 Pixel durchlaufen hat, um den Weichzeichner-Effekt im erhaltenen Bild zu vermeiden;
- es wird ein gesondertes Hilfsmittel verwendet, um den der Beleuchtung dienenden Strahl zu brechen; dieses Hilfsmittel besteht aus einem oder mehreren Diffusoren;
- es wird die Aufnahme von mindestens einem fokussierten Bild durchgeführt;
- die asynchrone Bildaufnahme der Fläche (S) wird mithilfe einer elektronischen Bilderfassungskarte "Frame Grabber" durchgeführt;
- die erfassten Bilder werden in Echtzeit verarbeitet und analysiert; die Bearbeitung und Analyse der in Echtzeit erfassten Bilder beinhaltet die folgenden Teilschritte:
- man befreit das erfasste Bild von jeder Variation des Beleuchtungsniveaus und/oder Auswirkung der Reflexionskraft der Fläche durch Beseitigung des Hintergrundes;

- man unterteilt das erfasste Bild in 1*m Bereiche und verbindet mit jedem Bereich einen Klarheitsparameter $n_i$;
- in Verbindung mit der Definition eines Kriteriums zur Bestimmung der Bildqualität, berechnet man einen Gesamt-Klarheitskoeffizienten p, der als Kriterium für die Annahme oder den Ausschluss des betreffenden Bildes für seine spätere Bearbeitung gilt; der besagte Koeffizient p lautet wie folgt:

$$\rho = (\Sigma \ \rho_i) \ / \ ( \ 1 \ * \ m)$$

$$\text{mit } \rho_i = 0 \text{ wenn } n_i < L, \text{ wenn nicht } \rho_i = 1$$

bzw.

$n_i$ : für den Bereich i berechneter Klarheitskoeffizient;

L: Grenzwert für die vordefinierte Klarheit, wird durch Kalibrierung im Labor erhalten bzw. ausgehend von einer großen Anzahl an Bildern, bei denen der Hintergrund bereinigt wurde:

$\rho_i$: Gewichtungskoeffizient des Bereichs i;

$\rho$ : Gesamt-Klarheitskoeffizient;

- das analysierte Bild wird gelöscht, wenn der Gesamt-Klarheitskoeffizient unterhalb eines als Minimum $\rho_{min}$ festgelegten Werts liegt; vorzugsweise ist der Wert von $\rho_{min}$ gleich 0,5;
- es wird eine Reihe von Abläufen durchgeführt, um die im aufgenommenen Bild vorhandenen unterschiedlichen Objekte zu isolieren und zu qualifizieren; somit:
- es wird eine erste Sortierung der besagten Objekte durchgeführt, wobei berücksichtigt wird, dass ein Objekt gelöscht wird, wenn letzteres zu einem Weichzeichnerbereich gehört, d.h. einem Kriterium $n_i$ < vordefiniertem Klarheitsgrenzwert L entspricht;
- anschließend wird eine weitere Sortierung an den verbleibenden Objekten in Abhängigkeit ihrer Fläche und ihrer Abmessungen durchgeführt;
- es wird jede Anzahl N an im Bild gefundenen Objekten gewichtet und durch den Gesamt-Klarheitskoeffizienten als einer gleichen Gruppe zugehörig bewertet, sodass:

$$N_{endgültig} = N/\rho$$

$N_{endgültig}$ stellt hierbei die Endanzahl der berücksichtigten Objekte unter Beachtung der Weichzeichnerbereiche des analysierten Bildes dar;

- Die bei den vorherigen Abläufen zur Sortierung erhaltenen Werte $N_{enagültig}$ werden dazu verwendet, um die Eigenschaften der inspizierten Oberfläche zu bestimmen.

2.  Verfahren gemäß dem Anspruch 1, für den Fall einer Umsetzung an einem vorbei geführten Stahlband, **dadurch gekennzeichnet, dass** dieses Band positioniert wird, indem das besagte Band durch eine Zugspannung auf das Band auf der Oberfläche einer Walze aufgebracht wird;

3.  Verfahren gemäß dem Anspruch 2, für den Fall eines vorbei geführten und über einen Zylinder (6) laufenden Stahlbandes, **dadurch gekennzeichnet, dass** man das Mikroskop (1) derart platziert, dass die Optikachse (Z) des Systems orthogonal die Zylinderachse (7) kreuzt und in einem Bogensegment zwischen der ersten Berührungslinie zwischen dem die Fläche tragenden Band (8) und dem Zylinder (6) sowie der letzten Berührungslinie zwischen dem die Fläche (S) tragenden Band und dem Zylinder (6) beinhaltet ist.

4.  Verfahren gemäß den Ansprüchen 2 bzw. 3, für den Fall eines vorbei geführten und über einen Zylinder laufenden Stahlbandes mit der Voraussetzung, dass der besagte Zylinder immer über eine Rundlaufabweichung entsprechend der Konstruktionstoleranzen verfügt; der Abstand zum Ziel/zur Beobachtungsebene variiert entsprechend einem temporären Zyklus, der von der Geschwindigkeit der Bewegung der Linie am Inspektionsort abhängt wobei das Verfahren **dadurch gekennzeichnet ist, dass** die Bildaufzeichnung für die Fläche (S) erfolgt, indem das System so positioniert wird, dass der Abstand zur Fokussierung sich im Intervall zur Abstandsvariation befindet, die mit der Rundlaufabweichung des Zylinders derart verknüpft ist, dass die Beobachtungsfläche periodisch durch eine Fokussierungsposition passiert.

5.  Verfahren gemäß dem Anspruch 1, im Zusammenhang der Analyse eines durch Galvannealing behandelten Stahlbandes, **dadurch gekennzeichnet, dass** 1 und m zwischen 6 und 10 liegen.

6. Verfahren gemäß einem oder mehreren der Ansprüche 1 bis 5, **dadurch gekennzeichnet, dass** der störende Einfluss des Hintergrundes ausgeschlossen wird, indem regelmäßig die Reaktion des Systems **dadurch** neu bewertet wird, dass ein Bild gebildet wird, für das jedem Pixel ein arithmetischer Durchschnittswert des Wertes der entsprechend durch die gesamten betreffenden Bilder erhaltenen Pixel zugewiesen wird.

7. Verfahren gemäß einem oder mehreren der Ansprüche 1 bis 6, **dadurch gekennzeichnet, dass** der Klarheitsparameter $n_i$ durch Verwendung der Übergänge eines Pixels zum angrenzenden Pixel durch Bilden der Summe der absoluten Werte der Niveauunterschiede zwischen einem Pixel und einem angrenzenden Pixel für den Erhalt dieses Klarheitsparameters $n_i$ verwendet wird und dass die besagten Parameter $n_i$ im Hinblick auf eine spätere Verwendung gespeichert werden und ferner **dadurch gekennzeichnet, dass** ein Gesamt-Klarheitskoeffizient p auf der Grundlage eines Tests für jeden Bereich gebildet wird.

8. Verfahren gemäß einem oder mehreren der Ansprüche 1 bis 7, **dadurch gekennzeichnet, dass** man das erhaltene Bild in Binärwerte nach dem Ablauf zur Beseitigung des Hintergrundes auf der Grundlage einer Methode zur maximalen Entropie umwandelt, welche darin besteht, die Menge der sich im ergebenden Bild enthaltenen Informationen zu optimieren, was zu einer maximalen Anzahl an Objekten führt, welche unterschieden und bewertet werden können und ferner dazu, dass die im binarisierten Bild enthaltenen Objekte im Hinblick darauf festgelegt und klassifiziert werden, dass die charakteristischen Strukturelemente, wie z. B. Kristalle, erkannt und in einer Liste der in dem sich ergebenden Bild enthaltenen Objekte erfasst werden können.

9. Verfahren gemäß einem oder mehreren der Ansprüche 1 bis 8, **dadurch gekennzeichnet, dass** ein mit dem Galvannealing-Verfahren behandeltes Stahlband **dadurch** charakterisiert wird, dass man die Fläche, den Schwerpunkt, die Breite und die Höhe der Trägheitsellipse für jedes Objekt berechnet, indem man für jedes verzeichnete Objekt die folgenden Tests durchführt:

a. Das Objekt wird beseitigt, wenn der Schwerpunkt des Objektes zu einem Bereich gehört, der auf der Grundlage dessen als weichgezeichnet betrachtet wird, dass der o.g. festgelegte Koeffizient $n_i$ unterhalb eines vordefinierten Grenzwerts liegt;

b. Das Objekt wird beseitigt, wenn es sich um eine horizontale Linie mit einer Dicke von 1 bis 3 Pixel handelt, vorzugsweise mit einer Dicke von einem Pixel, da hier davon ausgegangen wird, dass es sich um eine Störung handelt;

c. Man zählt das Objekt zu den sehr großen Objekten, wenn die Fläche des Objekts größer oder gleich einem vordefinierten Grenzwert namens "VeryBigAreaThres" entsprechend der per Galvannealing-Verfahren behandelten Stahlart ist;

d. Man zählt dieses Objekt zu den großen Objekten, wenn die Fläche des Objekts größer oder gleich einem vordefinierten Grenzwert "BigAreaThres" und geringer einem Grenzwert "VeryBigAreaThres" entsprechend der per Galvannealing-Verfahren behandelten Stahlart ist;

e. Man rechnet die Objekte zu den kleinen Objekten, wenn die Fläche des Objektes kleiner als der vordefinierte Grenzwert "SmallAreaThres" entsprechend der per Galvannealing-Verfahren behandelten Stahlart ist;

f. Wenn die Punkte c, d und e nicht überprüft worden sind, bestimmt man das Verhältnis (Höhe des Objekts/ Breite des Objekts) und zählt einzig die Kristalle, deren Verhältnis bei zwischen 0,2 und 0,5, vorzugsweise bei 0,3 liegt, um die im Bild vorhandenen Kristalle 5 zu bestimmen.

10. Verfahren gemäß einem oder mehreren der Ansprüche 1 bis 9, **dadurch gekennzeichnet, dass** man die Reflexionsfähigkeit an der mit dem Mikroskop beobachteten Stelle misst; ferner analysiert man mindestens zwei für die vordefinierten Wellenlängen erhaltene Werte; vorzugsweise berechnet man hierbei das Verhältnis der erhaltenen Werte.

11. Verfahren gemäß dem Anspruch 10, **dadurch gekennzeichnet, dass** man für die Wellenlängen von $0,85 \pm 0,05$ $\mu$m sowie $1,1 \pm 0,05$ $\mu$m pyrometrische Messungen durchführt sowie ferner **dadurch**, dass man die besagte Messung dafür verwendet, um das durch die Vermessung der Bilder erhaltene Ergebnis zu bewerten.

12. Vorrichtung zur Umsetzung eines Verfahrens zur Online-Charakterisierung einer sich bewegenden Fläche, insbesondere der Flächen eines kontinuierlich vorbei geführten Stahlbandes, das eine Behandlung mit dem Galvannealing-Verfahren erhalten hat, entsprechend jeweils einem der Ansprüche 1 bis 11, welches ein mit einem Vergrößerungsobjektiv in der Größenordnung des 5- bis 30-Fachen des Arbeitsabstandes ausgestattetes Industriemikroskop, d.h. größer als 10 mm, mit der größtmöglichen Feldtiefe mit einem Mindestwert von gleich oder größer als der Hälfte der jeweiligen Spitzenrauheit, im Allgemeinen 15 $\mu$m und ferner eine vergrößernde Linse zur Kameraanpassung zwischen dem 2,5- und dem 5-Fachen sowie eine mit dem Objektiv und der Anpassungslinse verbundene CCD-Kamera umfasst und ein Sichtfeld von zwischen 125 $\mu$m und 2000 $\mu$m Breite und im Wesentlichen eine räumliche Auflösung des Systems von mindestens 0,5 $\mu$m liefert; die Baugruppe Objektiv und Linse muss abhängig vom geforderten Sichtfeld und der geforderten räumlichen Auflösung für die Anwendung geeignet sein; das besagte Mikroskop beinhaltet eine Beleuchtung vom Typ Hellfeld und/oder Dunkelfeld, welche aus einem gepulsten Laser mit einer bis auf 10 mJ regelbaren Energie und einer von 0 bis 10 ns regelbaren Beleuchtungsdauer besteht und umfasst ferner eine den Laser-Ausgang mit dem Eingang der Beleuchtung des Mikroskops verbindende Faseroptik und darüber hinaus einen Entfernungssensor vom Typ Laser-Triangulation mit großer Präzision, somit mit mindestens 1/5 der Feldtiefe, sowie mit einer hohen Wiederholbarkeit, somit vorzugsweise mindestens 1 $\mu$m, der mit einem Abstand von mindestens 10 mm zur Bandoberfläche platziert wird und die Variationen in einem Intervall von mindestens -2 mm und + 2 mm misst; der besagte Sensor wird so montiert, dass der durch den Sensor anvisierte Bereich dem durch das Mikroskop beobachteten Bereich entspricht; ferner beinhaltet das System einen an der Regelung Z montierten Motor; die Achse Z entspricht hierbei der Optikachse des Mikroskopsystems, um das System korrekt zu fokussieren und/oder die besagte Faser ist mit 2 Diffusoren verbunden, von denen der eine am Ausgang des Lasers und am Eingang der Faseroptik und der andere am Ausgang der Faseroptik und am Eingang der Mikroskopbeleuchtung platziert ist. Die Vorrichtung des Systems umfasst darüber hinaus einen geeigneten Computer, um die Schritte Erfassen von Bildern und die Analyse der erfassten Bilder, wie sie in den Ansprüchen 1 bis 11 definiert sind, zu realisieren.

13. Vorrichtung gemäß dem Anspruch 12, **dadurch gekennzeichnet, dass** mindestens ein motorisierter Drehtisch verwendet wird, der eine Präzision und eine Wiederholbarkeit von mindestens 0,6° +/- 0,1° aufweist, um die Optikachse des Systems in einer senkrecht zur Beobachtungsebene stehenden Ebene zu platzieren.

14. Vorrichtung gemäß den Ansprüchen 12 bzw. 13, **dadurch gekennzeichnet, dass** ein Sensor verwendet wird, dessen geforderte Mindestpräzision für den Fall einer Beobachtung einer durch das Galvannealing-Verfahren aufgebrachten Beschichtung, bei 1/5 der Feldtiefe liegt.

15. Vorrichtung gemäß einem der Ansprüche 12 bis 14, **dadurch gekennzeichnet, dass** sie mindestens die folgenden Elemente beinhaltet:

    - ein mit einem Objektiv mit 20-facher Vergrößerung und einem großen Arbeitsabstand von 20 mm zum Arbeitsbereich und einer Feldtiefe von 7 $\mu$m sowie mit einer 5-fachen Anpassungslinse für eine Kamera ausgestattetes Industriemikroskop;
    - eine CCD-Kamera mit 768 x 576 Pixeln, welche mit einem Objektiv und der Anpassungslinse verbunden, ein Sichtfeld von 250 x 190 $\mu$m mit einer räumlichen Endauflösung von mindestens 0,5 $\mu$m liefert;
    - eine Beleuchtung vom Typ Hellfeld und / oder Dunkelfeld, welche aus einem gepulsten YAG-Laser mit 532 nm, mit bis zu 10 mJ regelbarer Energie und mit einer von 0 bis 10 ns regelbaren Beleuchtungszeit und einer Faseroptik besteht, die den Ausgang des Lasers mit dem Eingang der Mikroskopbeleuchtung verbindet; darüber hinaus umfasst die Beleuchtung 2 Diffusoren, vorzugsweise aus Mattglas, von denen der eine am Ausgang des Lasers und am Eingang der Faseroptik und der andere am Ausgang der Faseroptik und dem Eingang der Mikroskopbeleuchtung platziert wird; der erste Diffusor vergrößert einerseits den Laserstrahl und bricht teilweise seinen Zusammenhalt und vermeidet hierdurch, dass der Fasereingang mit einem zu stark konzentrierten Strahl angegriffen und somit beschädigt wird; der zweite Diffusor vergrößert erneut den Laserstrahl und bricht hierdurch gleichermaßen einen Teil seines Zusammenhangs; die Verbindung der beiden Diffusoren und der Faseroptik gestatten es, den Zusammenhalt des Laserstrahls ausreichend zu brechen und somit das Auftreten von Interferenzen auf Ebene des geschaffenen Bildes zu vermeiden;
    - ein Sensor vom Typ Laser-Triangulation mit großer Präzision von mindestens 0,5 $\mu$m und einer großen Wiederholbarkeit von mindestens 1 $\mu$m, der mit einem Abstand von mindestens 10 mm von der Oberfläche des vorbeilaufenden Stahlbandes platziert wird und die Variation in einem Intervall von -2 bis +2 mm misst; dieser Sensor wird schräg montiert, damit der durch den Sensor anvisierte Bereich dem durch das Mikroskop beobachteten Bereich entspricht.
    - ein Motor an der Regelung der Z-Ebene des Mikroskops, um das System korrekt zu fokussieren;
    - ein von einem Motor angetriebener Drehtisch (B) dient als Träger für die gesamte vorgenannte Baugruppe in Verbindung mit dem Industriemikroskop. Der besagte von einem Motor angetriebene Tisch verfügt über eine Präzision und eine Wiederholbarkeit von mindestens 0,6°, um die Optikachse Z des Systems in einer zur Beobachtungsebene senkrechten Ebene zu platzieren;

- ein zweiter durch einen Motor angetriebener Drehtisch (C) mit einer Präzision und einer Wiederholbarkeit von mindestens 0,6° stützt den ersten Tisch (B), damit die Optikachse senkrecht zur Beobachtungsebene platziert werden kann;

- ein Computer, der das durch die unterschiedlichen Teile A, B, und C gebildete System steuert, eine Karte zur Erfassung von Bildern "Frame Grabber" beinhaltet und mit Kameras in asynchron eingestellter Weise arbeiten kann; ferner umfasst dieser Computer eine Karte mit analogen und digitalen Ein- und Ausgängen mit einer Auflösung von 16 Bit an den analogen Eingängen, eine Karte zur Steuerung der 3 o.g. Motoren und ein Programm zur Erfassung und zur Verarbeitung von Daten; die Auflösung der Karte mit den Ein- und Ausgängen, wie sie für das durch den Laser-Triangulationssensor gelieferte Abstandssignal gefordert wird, muss eine Präzision von mindestens 1,4 $\mu$m ermöglichen, wie dies für eine gute Platzierung und eine gute Fokussierung des erforderlichen Bildes mit der geringen Feldtiefe des verwendeten Objektivs notwendig ist;

- eine Walze, auf die das zu prüfende Produkt durch eine auf das Band bei dem Vorbeilaufen angelegte Zugwirkung oder durch ein gesondertes geeignetes Hilfsmittel aufgebracht wird, das diese Funktion gewährleistet; die besagte Walze wird gegenüber der gesamten Vorrichtung platziert, welche das Mikroskop und die beiden Platzierungstische enthält; vorzugsweise verläuft die Optikachse des Systems durch die Mitte des Zylinders und wird an einer Stelle der Walze platziert, an der das Produkt sich perfekt an die Form des Zylinders anpasst und an der somit die Position seiner Oberfläche nicht von der Position der Walze und der Art des Produktes abhängt;

- ein Optiksensor wird mit dem Mikroskop verbunden. Der besagte Sensor dient im Rahmen der Messung des Anteils an Eisen und Pulverung der mit dem Galvannealing-Verfahren behandelten Bleche dazu, die durch die Bildverarbeitung erhaltenen Messungen außerhalb der Intervalle von 7 % - 12% Eisen zu überprüfen. Die Überprüfung besteht in einer Verknüpfung der Informationen, die einerseits durch die Analyse des Mikroskopbildes erhalten werden, mit den den Optiksensor einsetzenden pyrometrischen Messungen.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. MOREAS ; Y. HARDY.** Caractérisation des tôles galvannealed. *La Revue de Métallurgie-CIT,* Juin 2001, 599-606

- **Moreas, G ; Hardy, Y.** Advanced Sensors for Metals Processing. *Centre de Recherches Metallurgiques (Belgium),* 15 Août 1999, ISSN 0-919086-92-6